(19) Europäisches Patentamt

European Patent Office

Office européen des brevets

(11) **EP 1 409 996 B1**

(12) **EUROPEAN PATENT SPECIFICATION**

(45) Date of publication and mention
of the grant of the patent:
**11.10.2006 Bulletin 2006/41**

(21) Application number: **02750175.8**

(22) Date of filing: **19.07.2002**

(51) Int Cl.:
***G01N 21/55*** (2006.01)

(86) International application number:
**PCT/US2002/023004**

(87) International publication number:
**WO 2003/009010 (30.01.2003 Gazette 2003/05)**

(54) **TRANSMISSIVE OPTICAL DISC ASSEMBLIES FOR PERFORMING PHYSICAL MEASUREMENTS**

TRANSMISSIVE OPTISCHE PLATTE FÜR PHYSISCHE MESSUNGEN

ENSEMBLES DISQUES OPTIQUES TRANSPARENTS PERMETTANT DE REALISER DES MESURES PHYSIQUES

(84) Designated Contracting States:
**AT BE BG CH CY CZ DE DK EE ES FI FR GB GR IE IT LI LU MC NL PT SE SK TR**

(30) Priority: **19.07.2001 US 306599 P**

(43) Date of publication of application:
**21.04.2004 Bulletin 2004/17**

(73) Proprietors:
• **Burstein Technologies, Inc.**
**Irvine, CA 92618 (US)**
• **Nagaoka & Co., Ltd.**
**Hyogo 662-0934 (JP)**

(72) Inventors:
• **WORTHINGTON, Mark**
**Irvine, CA 92612-2002 (US)**
• **COOMBS, James Howard**
**Irvine, CA 92606 (US)**
• **ORTIZ, Victor Manuel**
**Orange, CA 92868 (US)**
• **FIRSTMAN, Cynthia Louise**
**La Crescenta, CA 91214 (US)**

(74) Representative: **Smaggasgale, Gillian Helen**
**W.P. Thompson & Co,**
**55 Drury Lane**
**London WC2B 5SQ (GB)**

(56) References cited:
**WO-A-00/05582      WO-A-00/26677**
**WO-A-98/12559      WO-A-98/15356**
**US-A- 6 030 581**

**Description**

**1. Field of invention**

The present invention relates to methods and design of transmissive optical bio-discs for the detection, and for quantitative and qualitative analysis of bindable substances. More specifically, this invention is directed to methods and apparatus for detection and quantification of bindable substances through affinity reaction with a solid phase linked binding substance. The solid phase is preferably provided by the surface of a transmissive optical bio-disc, which carries the immobilized binding reagent and encoded information for performing the analysis. The analyte of interest is carried within fluidic circuits of the transmissive optical bio-disc. Separation of bound analyte from free analytes may be performed using centrifugal force imparted by rotating the transmissive optical bio-disc.

**2. Discussion of the Related Art**

The detection and quantification of analytes in the blood or other body fluids are essential for diagnosis of diseases, elucidation of the pathogenesis, and for monitoring the response to drug treatment. Traditionally, diagnostic assays are performed in laboratories by trained technicians using complex apparatus. Performing these assays is usually time-consuming and costly. Thus, there is a significant need to make diagnostic assays and forensic assays of all types faster and more local to the end-user. Ideally, clinicians, patients, investigators, the military, other health care personnel, and consumers should be able to test themselves for the presence of certain risk factors or disease indicators in their systems, and to test for the presence of certain biological material at a crime scene or on a battlefield. At present, there are a number of medical diagnostic, silicon-based, devices with nucleic acids and/or proteins attached thereto that are commercially available or under development. These chips are not for use by the end-user, or for use by persons or entities lacking very specialized expertise and expensive equipment.

Commonly assigned U.S. Patent No. 6,030,581 entitled "Laboratory in a Disk" issued February 29, 2000 (the '581 patent). The '581 patent optical bio-discloses an apparatus that includes an optical bio-disc, adapted to be read by an optical reader, which has a sector having a substantially self-contained assay system useful for localizing and detecting an analyte suspected of being in a sample.

**SUMMARY OF THE INVENTION**

Analysis of biological fluids aimed at the quantitative and qualitative determination of substances associated with a wide variety of physiological disorders, bioresearch, proteomics, environmental studies, agriculture, and food industry, relies on specific binding assays from which the immunoassay plays a dominant role. The outstanding specificity and sensitivity for quantitative determination of an almost limitless number of analytes in practically any milieu, and the ability to miniaturize and adapt to automation makes them ideal tools for routine assays.

Antibody binding techniques are based on the interaction of a binding antibody, receptor, or other binding proteins with an antigen or a specific ligand molecule and the formation of an antibody-antigen or receptor-ligand complex. By changing certain conditions a binding assay can be designed to determine either an analyte, ligand, or target binding reagent or an antibody of interest. The steps are similar but the assay configuration provides results pertinent to the antigen or antibody of interest.

Thus, according to one aspect of the present invention, there is provided an optical bio-disc, comprising: a lens component layer; an operational structure layer comprising one or more operational structures disposed on a top surface of the lens component layer; a thin semi-reflective layer substantially covering the operational structures; a cover layer spaced apart from the semi-reflective layer so as to form a sample analysis chamber between the semi-reflective layer and the cover layer; a reflective layer positioned over the cover layer; one or more samples within the sample analysis chamber; and a focal zone comprising at least a portion of the operational structure layer and at least a portion of the sample analysis chamber, wherein the lens component layer focuses light received from a light source substantially within the focal zone so that light reflected from the reflective layer is usable to generate information regarding the one or more samples located in the sample analysis chamber.

According to a further aspect of the present invention, there is provided a light transmissive optical bio-disc and drive system, the system comprising: a light transmissive optical bio-disc comprising: a substantially circular substrate having a center and an outer edge, the substrate comprising operational structures on a top surface; a thin semi-reflective layer substantially covering the operational structures; a cap portion integrally attached to the thin semi-reflective layer by an adhesive member, the adhesive member having one or more portions removed, thereby forming one or more channels defined therebetween; and one or more capture probes immobilized on the thin semi-reflective layer, the capture probes defining capture zones within the one or more channels; and a disc drive comprising: a light source for directing light to said capture zones; a detector system for detecting light reflected from or transmitted through the optical bio-disc at the capture zones; and a processor coupled to the detector system, the processor receiving signals from the detector system indicative of the light incident on the detector system, the signals usable to count items in a sample bound to the capture probes

**Capture Probe Binding And Sample Application**

When the sample is injected into a micro-channel, fluidic circuit, or flow channel on an optical bio-disc, the target agent including, for example, target antigen or antibody, binds to a capture probe bound in a capture or target zone on a solid support such as an optical bio-disc substrate. The capture probe may be an antigen recognized by the target antibody or an antibody or receptor with specific affinity to the target antigen or ligand. Following the binding step, unbound target agent is removed through a wash step. It should be understood that various techniques, procedures and chemistries, know in the art, may be used to bind the capture probe onto a solid support including, but not limited to, direct covalent binding of probes onto a metallic or activated surface, passive adsorption, and through cross-linking reagents.

Further details relating to surface chemistries used to bind probes onto solid support are optical bio-disclosed in, for example, commonly assigned co-pending U.S. Provisional Application Serial No. 60/353,770 entitled "Capture Layer Assemblies Including Metal Layer for Immobilization of Receptor Molecules and Related Optical Assay Optical bio-discs" filed January 30, 2002; and U.S. Provisional Application Serial No. 60/353,745 entitled "Capture Layer Assemblies Including Polymer Substrates for Immobilization of Receptor Molecules and Related Optical Assay Optical bio-discs" filed January 30, 2002.

In addition to surface chemistries for attaching capture probes, blocking agents may be used to block areas within the capture or target zone and the flow channel where capture probes are not bound (non-capture areas) to prevent non-specific binding of the target or analyte, signal probes, and reporters onto these areas. Blocking agents include, but are not limited to proteins such as BSA, gelatin, sugars such as sucrose, detergents such as tween-20, genetic material such as sheared salmon sperm DNA, and polyvinyl alcohol.

**Signal Generation**

Signal is generated from tags or labels attached to a signal or reporter agents or probes that has specific affinity to the target agent. Signal agents or probes may include, for example, signal antibodies or signal ligands, tagged with microspheres, sub-micron nanospheres, or enzymes. The microspheres or nanospheres may be fluorescent labeled (fluospheres), phosphorescent, luminecent, or chemiluminescent. The microspheres or nanospheres may also carry different chemical functionalities including, for example, carboxyl, amino, aldehyde, and hydrazine functional groups. These functional groups may facilitate binding of the signal agent. The enzyme may facilitate a chemical reaction that produces fluorescence, color, or a detectable signal in the presence of a suitable substrate. For example, conjugated horseradish peroxidase (HRP; Pierce, Rockford, Illinois) may be used with the substrate 3,3,5,5-tetramethylbenzidine (TMB; Calbiochem cat. no. 613548, CAS-54827-17-7) in the presence of hydrogen peroxide to produce an insoluble precipitate. Horseradish peroxidase can also be used in conjunction with CN/DAB (4-chloronaphthol/3,3'-diaminobenzidine, tetrahydrochloride), 4-CN (4-chloro-1-napthol), AEC (3-amino-9-ethyl carbazol) and DAB (3,3-diaminobenzidine tetrahydrochloride) to form insoluble precipitates. Similarly, the enzyme alkaline phosphatase (AP) can be used with the substrate bromochloroindolylphosphate in the practice of the present invention. Other suitable enzyme/substrate combinations will be apparent to those of skill in the art.

**Detection**

The signal from the microspheres or the enzyme reaction can be read with the optical bio-disc readers developed to be utilized in conjunction herewith. Either a bottom detector on an optical bio-disc with a reflective cover, or a top detector with a transmissive optical bio-disc may be employed as the optical bio-disc reader for the assay and optical bio-disc inventions optical bio-disclosed herein.

**Optical Bio-Disc Implementation**

The assays and methods of the present invention may be advantageously implemented on an analysis optical bio-disc, modified optical bio-disc, or optical bio-disc. The optical bio-disc may include a flow channel having target or capture zone, a return channel in fluid communication therewith, and in some embodiments a mixing chamber in fluid communication with the flow channel.

The optical bio-disc may be implemented on an transmissive bio-disc including an information encoding format such as CD, CD-R, or DVD or a modified version thereof. The optical bio-disc may include encoded information for performing, controlling, and post-processing the test or assay. For example, such encoded information may be directed to controlling the rotation rate of the optical bio-disc, incubation time, incubation temperature, and/or specific steps of the assay. Depending on the test, assay, or investigational protocol, the rotation rate may be variable with intervening or consecutive sessions of acceleration, constant speed, and deceleration. These sessions may be closely controlled both as to speed and time of rotation to provide, for example, mixing, agitation, or separation of fluids and suspensions with agents, reagents, DNA, RNA, antigen, antibodies, ligands, and receptors.

### Drive Implementation

A disc drive assembly or reader may be employed to rotate the optical bio-disc, read and process any encoded information stored on the optical bio-disc, and analyze the samples in the flow channel of the optical bio-disc. The disc drive is thus provided with a motor for rotating the optical bio-disc, a controller for controlling the rate of rotation of the optical bio-disc, a processor for processing return signals from the optical bio-disc, and an analyzer for analyzing the processed signals. The drive may include software specifically developed for performing the assays optical bio-disclosed herein.

The rotation rate of the motor is controlled to achieve the desired rotation of the optical bio-disc. The disc drive assembly may also be utilized to write information to the optical bio-disc either before or after the test material in the flow channel and target or capture zone is interrogated by the read beam of the drive and analyzed by the analyzer. The optical bio-disc may include encoded information for controlling the rotation rate of the optical bio-disc, providing processing information specific to the type of test to be conducted, and for displaying the results on a display monitor associated with the bio-drive in accordance with the assay methods relating hereto.

### Other Implementations Of The Current Invention

The present invention may be readily implemented in some of the optical bio-discs, assays, and systems optical bio-disclosed in the following commonly assigned and co-pending patent applications: U.S. Patent Application Serial No. 09/378,878 entitled "Methods and Apparatus for Analyzing Operational and Non-operational Data Acquired from Optical bio-discs" filed August 23, 1999; U.S. Provisional Patent Application Serial No. 60/150,288 entitled "Methods and Apparatus for Optical bio-disc Data Acquisition Using Physical Synchronization Markers" filed August 23, 1999; U.S. Patent Application Serial No. 09/421,870 entitled "Trackable Optical bio-discs with Concurrently Readable Analyte Material" filed October 26, 1999; U.S. Patent Application Serial No. 09/643,106 entitled "Methods and Apparatus for Optical bio-disc Data Acquisition Using Physical Synchronization Markers" filed August 21, 2000; U.S. Patent Application Serial No. 09/999,274 entitled "Optical bio-discs with Reflective Layers" filed on November 15, 2001; U.S. Patent Application Serial No. 09/988,728 entitled "Methods And Apparatus For Detecting And Quantifying Lymphocytes With Optical bio-discs" filed on November 20, 2001; U.S. Patent Application Serial No. 09/988,850 entitled "Methods and Apparatus for Blood Typing with Optical bio-discs" filed on November 19, 2001; U.S. Patent Application Serial No. 09/989,684 entitled "Apparatus and Methods for Separating Agglutinants and Disperse Particles" filed November 20, 2001; U.S. Patent Application Serial No. 09/997,741 entitled "Dual Bead Assays Including Optical bio-discs and Methods Relating Thereto" filed November 27, 2001; U.S. Patent Application Serial No. 09/997,895 entitled "Apparatus and Methods for Separating Components of Particulate Suspension" filed November 30, 2001; U.S. Patent Application Serial No. 10/005,313 entitled "Optical bio-discs for Measuring Analytes" filed December 7, 2001; U.S. Patent Application Serial No. 10/006,371 entitled "Methods for Detecting Analytes Using Optical bio-discs and Optical bio-disc Readers" filed December 10, 2001; U.S. Patent Application Serial No. 10/006,620 entitled "Multiple Data Layer Optical bio-discs for Detecting Analytes" filed December 10, 2001; U.S. Patent Application Serial No. 10/006,619 entitled "Optical bio-disc Assemblies for Performing Assays" filed December 10, 2001; U.S. Patent Application Serial No. 10/020,140 entitled "Detection System For Disk-Based Laboratory And Improved Optical bio-disc Including Same" filed December 14, 2001; U.S. Patent Application Serial No. 10/035,836 entitled "Surface Assembly For Immobilizing DNA Capture Probes And Bead-Based Assay Including Optical bio-discs And Methods Relating Thereto" filed Dec. 21, 2001; U.S. Patent Application Serial No. 10/038,297 entitled "Dual Bead Assays Including Covalent Linkages For Improved Specificity And Related Optical Analysis Optical bio-discs" filed January 4, 2002; U.S. Patent Application Serial No. 10/043,688 entitled "Optical bio-disc Analysis System Including Related Methods For Biological and Medical Imaging" filed January 10, 2002; U.S. Provisional Application Serial No. 60/363,949, entitled "Methods for Differential Cell Counts Including Leukocytes and Use of Optical bio-disc for Performing Same" filed March 12, 2002; U.S. Patent Application Serial No. 10/150,702 entitled "Surface Assembly For Immobilizing DNA Capture Probes In Genetic Assays Using Enzymatic Reactions To Generate Signal In Optical bio-discs And Methods Relating Thereto" filed May 17, 2002; and U.S. Provisional Application Serial No. 60/388,132, entitled "Biomagnetic Assays and Related Optical bio-disc Systems" filed June 12, 2002. All of these applications are herein incorporated by reference. They thus provide background and related optical bio-disclosure as support hereof as if fully repeated herein.

## BRIEF DESCRIPTION OF THE DRAWINGS

Further objects of the present invention together with additional features contributing thereto and advantages accruing therefrom will be apparent from the following description of the preferred embodiments of the invention which are shown in the accompanying drawing figures with like reference numerals indicating like components throughout, wherein:

Fig. 1 is a pictorial representation of an optical bio-disc system according to the present invention.

Fig. 2 is an exploded perspective view of a transmissive optical bio-disc as employed in conjunction with the present invention.

Fig. 3 is a perspective view representing the optical bio-disc shown in Fig. 2 with a cut-away section illustrating the functional aspects of a semi-reflective layer of the optical bio-disc.

Fig. 4 is a graphical representation showing the relationship between thickness and transmission of a thin gold film.

Fig. 5 is a top plan view of the optical bio-disc shown in Fig. 2.

Fig. 6 is a perspective view of the optical bio-disc illustrated in Fig. 2 with cut-away sections showing the different layers of the optical bio-disc including the type of semi-reflective layer shown in Fig. 3.

Fig. 7 is a perspective and block diagram representation illustrating the system in Fig. 1 in more detail.

Fig. 8A is a partial cross sectional view taken perpendicular to a radius of the transmissive optical bio-disc illustrated in Figs. 2, 5, and 6.

Fig. 8B is a partial cross sectional view taken perpendicular to a radius of an optical bio-disc in the transmissive format showing capture antibodies attached within a flow channel of the optical bio-disc.

Fig. 9 is a partial longitudinal cross sectional view representing the transmissive format optical bio-discs of the present invention illustrating a wobble groove formed therein and a top detector.

Fig. 10 is a view similar to Fig. 8A showing the entire thickness of the transmissive optical bio-disc and the initial refractive property thereof.

Fig. 11 is an illustration of an optical path that has been simulated as employed in conjunction with the present invention.

Fig. 12 is a line plot of a signal on the detector as the focused spot moves from the center to the edge of a refractive sphere.

Fig. 13 is an image of a particle detected by the system of the present invention.

Fig. 14A shows a focused beam modeled as a converging spherical wave as employed in conjunction with the present invention.

Fig. 14B shows a focused beam similar to Fig. 14A that is modeled as a sum of plane waves as employed in conjunction with the present invention.

Fig. 15 is a diagram showing the coordinate system used in calculating the scattering of an incident plane wave by a sphere using Mie theory principles as employed in conjunction with the present invention.

Fig. 16 is a plot showing the modulus of an electric field as a function of angle for a fixed radius illustrating the angular dependency of scattering from a 2 $\mu$m metal sphere as employed in conjunction with the present invention.

Fig. 17 shows the same type of plot as Fig. 16, but for a scattering from a dielectric sphere.

Fig. 18 is a 3D image of a scattered electric field for a 0.5 $\mu$m metal particle.

Fig. 19 shows a plot of the tangential E-field outside a metal sphere as a function of its radius.

Fig. 20 shows a plot of the tangential E-field outside a dielectric as a function of the radius of the sphere.

Figs. 21A - 21D represent the intensity distribution in the exit pupil of an objective lens at 0,1.5, 3, and 5 $\mu$m offset from the center of a 3 $\mu$m PMMA sphere as employed in conjunction with the present invention.

Figs. 22A-22D represent sketches of geometric rays for illustrating the focusing effects of a small sphere and also to graphically illustrate the images of 21A-21D supra.

Figs. 23A-23C graphically illustrates the light that falls on the detector as the disc moves away from the focal position of the imaging spot, due to the use of an astigmatic lens in the detection branch of the optics.

Figs. 24A and 24 B illustrate images obtained of a signal on a detector after a Fourier transform is taken of the electric field in the exit pupil of the objective lens and after aberrations are added to simulate the astigmatic focus element as employed in conjunction with the present invention.

Figs. 25A-25D illustrate images of the light distribution on the detector when the beam is focused 0 $\mu$m, 2 $\mu$m, 3.5 $\mu$m, and 5 $\mu$m from the center of a 3um PMMA sphere.

Fig. 26 is a cross-sectional simplified view of a forward relief transmissive disc embodiment of the present invention.

Fig. 27 is a more detailed cross-sectional view of the embodiment of the forward relief transmissive disc where fluid flows above the operational features as employed in conjunction of the present invention.

Fig. 28 is a more detailed cross-sectional view of the embodiment of the forward relief transmissive disc where fluid flows below the operational features as employed in conjunction with the present invention.

Fig. 29 is a detailed cross-sectional view of the embodiment of the forward relief transmissive disc illustrating its roaming property as employed in conjunction with the present invention.

Fig. 30 is a cross-sectional simplified view if a transmissive disc embodiment of the present invention.

Fig. 31 is a more detailed cross-sectional view of an embodiment of a transmissive disc having a reflective topmost layer as employed in conjunction with the present invention.

Fig. 32 is a more detailed cross-sectional view of another embodiment of a transmissive disc having a refractive topmost layer as employed in conjunction with the present invention.

## DETAILED DESCRIPTION OF THE INVENTION

The present invention is directed to disc drive systems, optical bio-discs, binding assays, including, for example, immunoassays, and related detection methods and software. Each of these aspects of the present invention is discussed below in further detail.

One embodiment of the present invention is an optical bio-disc that has a transmissive layer on its operational features. In common optical disc implementation, operational features include pits, lands, grooves, zones. The transmissive layer is semi-reflective, letting some of the laser beam to pass through while reflecting part of it back. The reflected portion is used to provide necessary signal support of normal disc operations such as tracking, focus, power control, etc. The transmissive layer on the operational features also allows incident laser beam to go through operational features to provide better characterizing function of samples on the bio-disc by allowing more refracted and scattered light to be detected by the detector on the optical disc drive. Since the refraction and scattering of light is caused by investigational features (sample) on the optical bio-disc, the improved collection of these light beams will improve the signal needed for characterizing the investigational features.

Optically, with transmissive layer in place, the return beam can be detected without taking into account the effect of polarization. Also the transmissive property allows an optical disc drive to have a larger optical detector. The larger detector can better detect light scattered by the investigational features deposited on the disc. In one embodiment, the transmissive disc has a final reflective layer that reflects the transmitted laser beam back to a bottom detector. In another embodiment, the transmissive disc has a refractive layer that lets the transmitted laser beam through to a top detector. In the following section, numerous figures are given to further illustrate the composition and optical properties of the transmissive optical bio-discs. A theory of characterizing the optical properties of the transmissive optical bio-disc is also disclosed.

### Drive System and Related Optical bio-discs

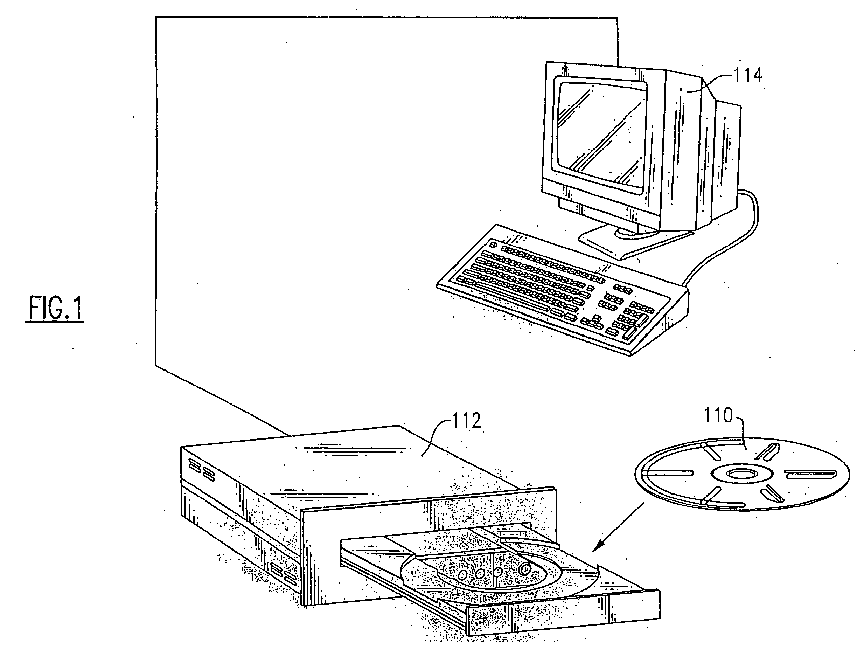

Fig. 1 is a perspective view of an optical bio-disc 110 according to the present invention as implemented to conduct the biological assays optical bio-disclosed herein. The present optical bio-disc 110 is shown in conjunction with an disc drive 112 and a display monitor 114.

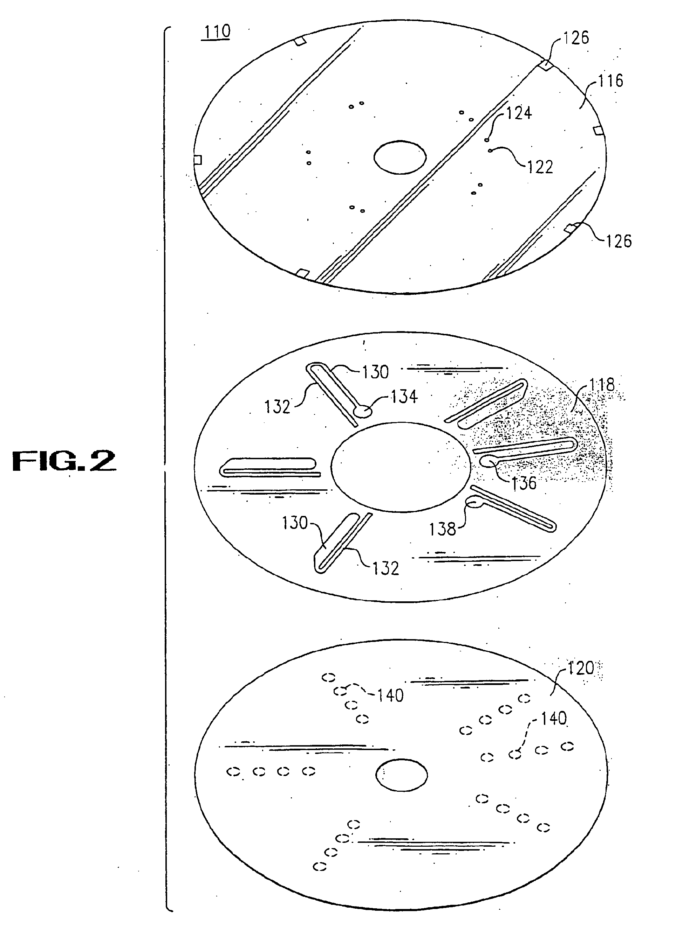

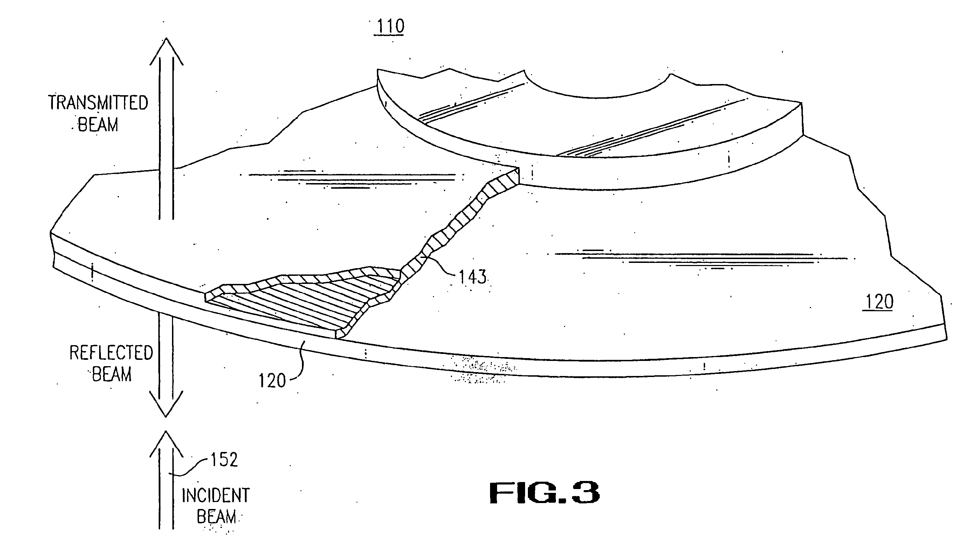

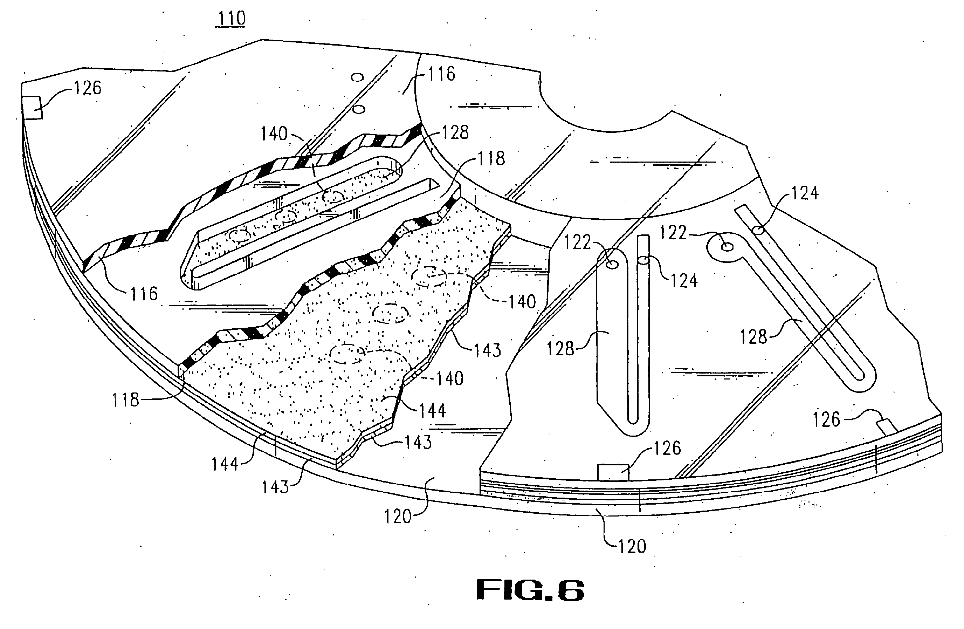

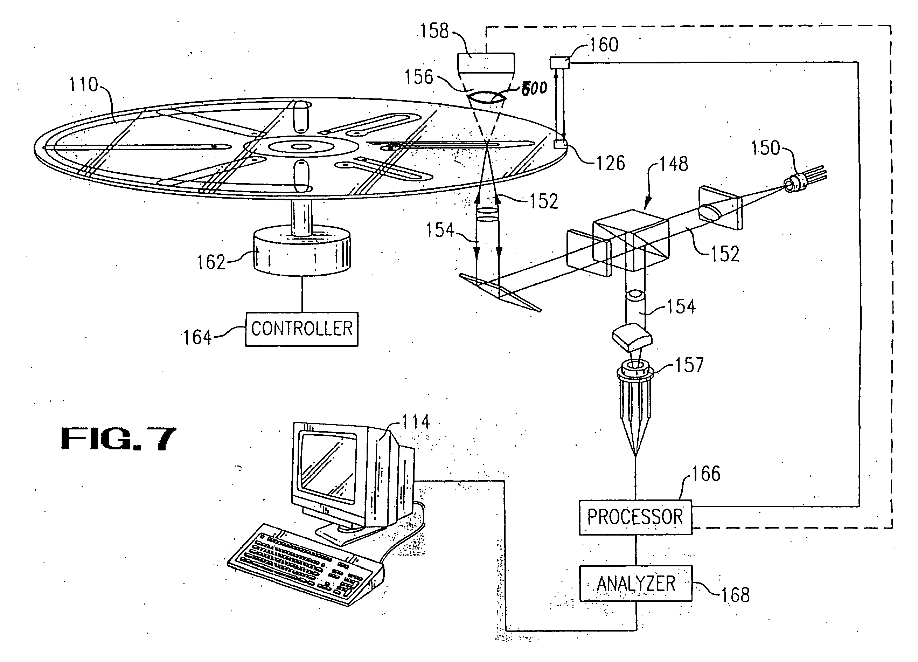

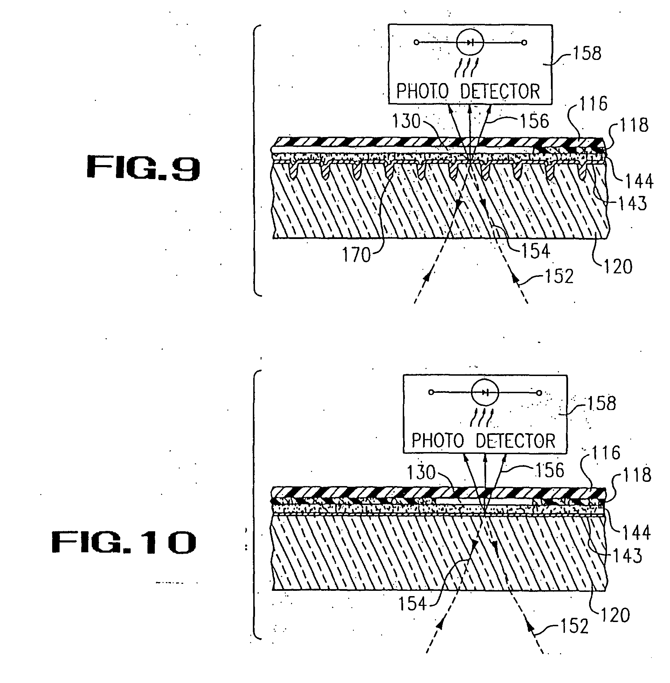

Fig. 2 is an exploded perspective view of the principal structural elements of an optical bio-disc 110. According to another embodiment of the present invention, the optical bio-disc is a transmissive type of optical bio-disc. The principal structural elements of the transmissive type of optical bio-disc 110 similarly include the cap portion 116, the adhesive member 118, and the substrate 120 layer. The cap portion 116 includes one or more inlet ports 122 and one or more vent ports 124. The cap portion 116 may be formed from a polycarbonate layer. Optional trigger markings 126 may be included on the surface of a thin semi-reflective metal layer 143, as best illustrated in Figs. 6 and 9. Trigger markings 126 may include a clear window in all three layers of the optical bio-disc, an opaque area, or a reflective or semi-reflective area encoded with information that sends data to the processor 166, Fig. 7, which in turn interacts with the operative functions of the interrogation beam 152, Figs. 3 and 7.

The second element shown in Fig. 2 is the adhesive member or channel layer 118 having fluidic circuits 128 or U-channels formed therein. The fluidic circuits 128 are formed by stamping or cutting the membrane to remove plastic film and form the shapes as indicated. Each of the fluidic circuits 128 includes the flow channel 130 and the return channel 132. Some of the fluidic circuits 128 illustrated in Fig. 2 include the mixing chamber 134. Two different types of mixing chambers 134 are illustrated. The first is the symmetric mixing chamber 136 that is symmetrically formed relative to the flow channel 130. The second is the off-set mixing chamber 138. The off-set mixing chamber 138 is formed to one side of the flow channel 130 as indicated.

The third element illustrated in Fig. 2 is the substrate 120 which may include the target or capture zones 140. The substrate 120 is preferably made of polycarbonate and has the thin semi-reflective metal layer 143 deposited on the top thereof in Fig. 3. The semi-reflective layer 143 associated with the substrate 120 of the optical bio-disc 110 illustrated in Figs. 2 and 3 is significantly thinner than a reflective layer on the substrate of a reflective optical bio-disc. The thinner semi-reflective layer 143 allows for some transmission of the interrogation beam 152 through the structural layers of the transmissive optical bio-disc. The thin semi-reflective layer 143 may be formed from a metal such as aluminum or gold.

Fig. 3 is an enlarged perspective view of the substrate 120 and semi-reflective layer 143 of the transmissive embodiment of the optical bio-disc 110 illustrated in Fig. 2. The thin semi-reflective layer 143 may be made from a metal such as aluminum or gold, a semiconductor such as silicon or germamium, or a dielectric such as multi-layer dielectric films of silicon dioxide, zinc sulfide, and tantalum oxide. In the preferred embodiment, the thin semi-reflective layer 143 of the transmissive optical bio-disc illustrated in Figs. 2 and 3 is approximately 20-300 Å thick and does not exceed 400 Å. This thinner semi-reflective layer 143 allows a portion of the incident or interrogation beam 152 to penetrate and pass through the semi-reflective layer 143 to be detected by a top detector 158, Fig. 7, while some of the light is reflected or returned back along the incident path. As indicated below, Table 1 presents the reflective and transmissive characteristics of a gold film relative to the thickness of the film. The gold film layer is fully reflective at a thickness greater than 800 Å. While the threshold density for transmission of light through the gold film is approximately 400 Å.

**TABLE 1**

| Au film Reflection and Transmission (Absolute Values) | | | |
|---|---|---|---|
| **Thickness (Angstroms)** | **Thickness (nm)** | **Reflectance** | **Transmittance** |
| 0 | 0 | 0.0505 | 0.9495 |
| 50 | 5 | 0.1683 | 0.7709 |
| 100 | 10 | 0.3981 | 0.5169 |
| 150 | 15 | 0.5873 | 0.3264 |
| 200 | 20 | 0.7142 | 0.2057 |
| 250 | 25 | 0.7959 | 0.1314 |
| 300 | 30 | 0.8488 | 0.0851 |
| 350 | 35 | 0.8836 | 0.0557 |
| 400 | 40 | 0.9067 | 0.0368 |
| 450 | 45 | 0.9222 | 0.0244 |
| 500 | 50 | 0.9328 | 0.0163 |
| 550 | 55 | 0.9399 | 0.0109 |
| 600 | 60 | 0.9448 | 0.0073 |
| 650 | 65 | 0.9482 | 0.0049 |
| 700 | 70 | 0.9505 | 0.0033 |
| 750 | 75 | 0.9520 | 0.0022 |
| 800 | 80 | 0.9531 | 0.0015 |

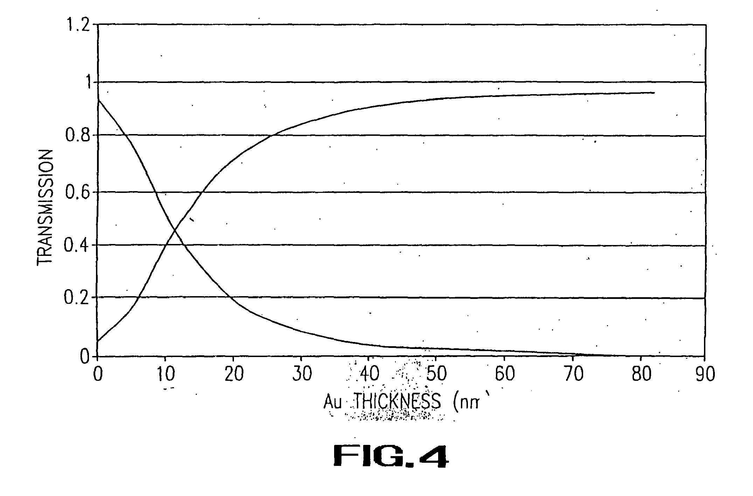

In addition to Table 1, Fig. 4 provides a graphical representation of the inverse proportion of the reflective and transmissive nature of the thin semi-reflective layer 143 based upon the thickness of the gold. Reflective and transmissive values used in the graph illustrated in Fig. 4 are absolute values.

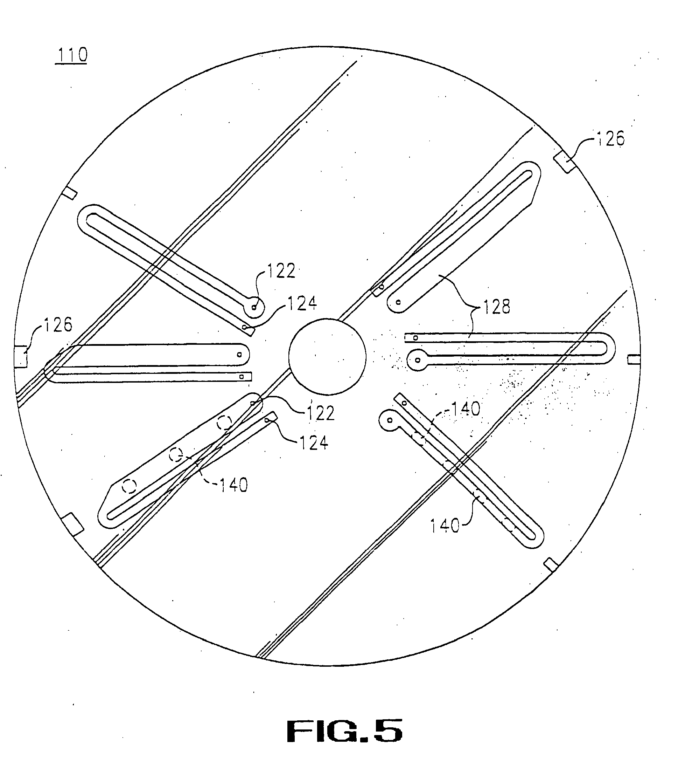

Fig. 5 is a top plan view of the transmissive type optical bio-disc 110 illustrated in Figs. 2 and 3 with the transparent cap portion 116 revealing the fluidic channels, the trigger markings 126, and the target zones 140 as situated within the optical bio-disc.

Fig. 6 is an enlarged perspective view of the optical bio-disc 110 according to the transmissive optical bio-disc embodiment of the present invention. The optical bio-disc 110 is illustrated with a portion of the various layers thereof cut away to illustrate a partial sectional view of each principal layer, substrate, coating, or membrane. Fig. 6 illustrates a transmissive optical bio-disc format with the clear cap portion 116, the thin semi-reflective layer 143 on the substrate 120, and trigger markings 126. Trigger markings 126 include opaque material placed on the top portion of the cap. Alternatively the trigger marking 126 may be formed by clear, non-reflective windows etched on the thin reflective layer 143 of the optical bio-disc, or any mark that absorbs or does not reflect the signal coming from the trigger detector 160 in Fig. 7.

Fig. 6 also shows, the target zones 140 formed by marking the designated area in the indicated shape or alternatively in any desired shape. Markings to indicate target zone 140 may be made on the thin semi-reflective layer 143 on the substrate 120 or on the bottom portion of the substrate 120 (under the optical bio-disc). Alternatively, the target zones 140 may be formed by a masking technique that includes masking the entire thin semi-reflective layer 143 except the target zones 140. In this embodiment, target zones 140 may be created by silk screening ink onto the thin semi-reflective layer 143. An active layer 144 may be applied over the thin semi-reflective layer 143. In the preferred embodiment, the active layer 144 is a 40 to 200 $\mu$m thick layer of 2% polystyrene. Alternatively, polycarbonate, gold, activated glass, modified glass, or modified polystyrene, for example, polystyrene-co-maleic anhydride, may be used. The active layer 144 may also be preferably formed through derivatization of the reflective layer 142 with self assembling monolayers such as, for example, dative binding of functionally active mercapto compounds on gold and binding of functionalized silicone compounds on aluminum. In addition hydrogels can be used. As illustrated in this embodiment, the plastic adhesive member 118 is applied over the active layer 144. If the active layer 144 is not present, the adhesive member 118 is directly applied over the semi-reflective metal layer 143. The exposed section of the plastic adhesive member 118 illustrates the cut out or stamped U-shaped form that creates the fluidic circuits 128. The final principal structural layer in this transmissive embodiment of the present optical bio-disc 110 is the clear, non-reflective cap portion 116 that includes inlet ports 122 and vent ports 124.

Fig. 7 is a representation in perspective and block diagram illustrating optical components 148, a light source 150 that produces the incident or interrogation beam 152, a return beam 154, and a transmitted beam 156. In the transmissive optical bio-disc format, the transmitted beam 156 is detected, by a top detector 158 via lens or optical system 600, and is also analyzed for the presence of signal agents. In the transmissive embodiment, a photo detector may be used as a top detector 158.

Fig. 7 also shows a hardware trigger mechanism that includes the trigger markings 126 on the optical bio-disc and a trigger detector 160. The hardware triggering mechanism is used in both reflective optical bio-discs and transmissive optical bio-discs (Fig. 6). The triggering mechanism allows the processor 166 to collect data only when the interrogation beam 152 is on a respective target zone 140. Furthermore, in the transmissive optical bio-disc system, a software trigger may also be used. The software trigger uses the bottom detector to signal the processor 166 to collect data as soon as the interrogation beam 152 hits the edge of a respective target zone 140. Fig. 7 also illustrates a drive motor 162 and a controller 164 for controlling the rotation of the optical bio-disc 110. Fig. 7 further shows the processor 166 and analyzer 168 implemented in the alternative for processing the return beam 154 and transmitted beam 156 associated the transmissive optical bio-disc.

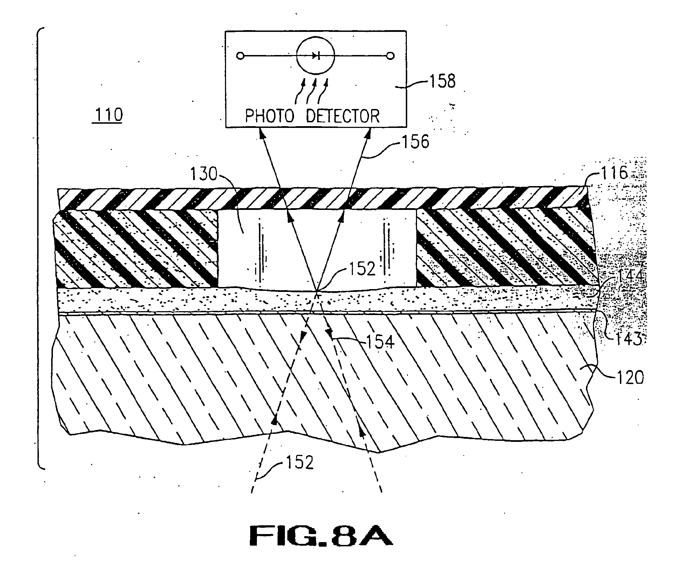

Fig. 8A is a partial cross sectional view of the transmissive embodiment of the optical bio-disc 110 according to the present invention. Fig. 8A illustrates a transmissive optical bio-disc format with the clear cap portion 116 and the thin semi-reflective layer 143 on the substrate 120. Fig. 8A also shows the active layer 144 applied over the thin semi-reflective layer 143. In the preferred embodiment, the transmissive optical bio-disc has the thin semi-reflective layer 143 made from a metal such as aluminum or gold approximately 100-300 Angstroms thick and does not exceed 400 Angstroms. This thin semi-reflective layer 143 allows a portion of the incident or interrogation beam 152, from the light source 150 in Fig. 7, to penetrate and pass upwardly through the optical bio-disc to be detected by a top detector 158, while some of the light is reflected back along the same path as the incident beam but in the opposite direction. In this arrangement, the return or reflected beam 154 is reflected from the semi-reflective layer 143. Thus in this manner, the return beam 154 does not enter into the flow channel 130. The reflected light or return beam 154 may be used for tracking the incident beam 152 on pre-recorded information tracks formed in or on the semi-reflective layer 143 as described in more detail in conjunction with Fig. 9.

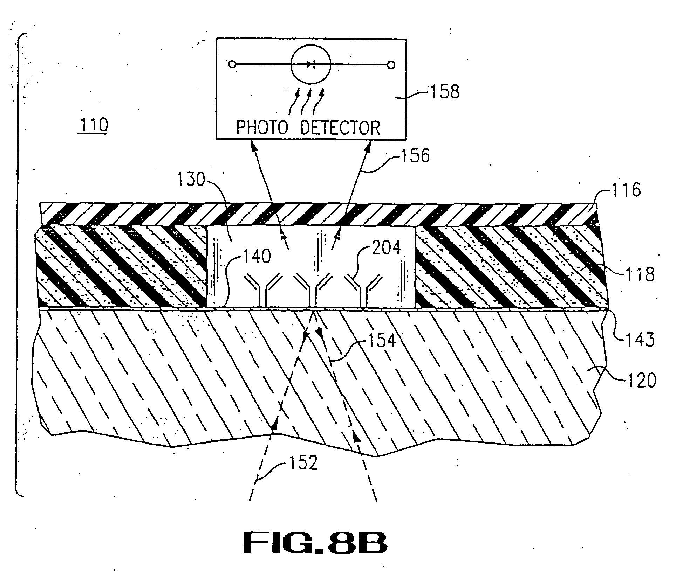

Fig. 8B is a view similar to Fig. 8A showing all the components of the reflective optical bio-disc described in Fig. 8A. Fig. 8B further shows capture antibodies 204 attached to the substrate 120 within the capture zone 140.

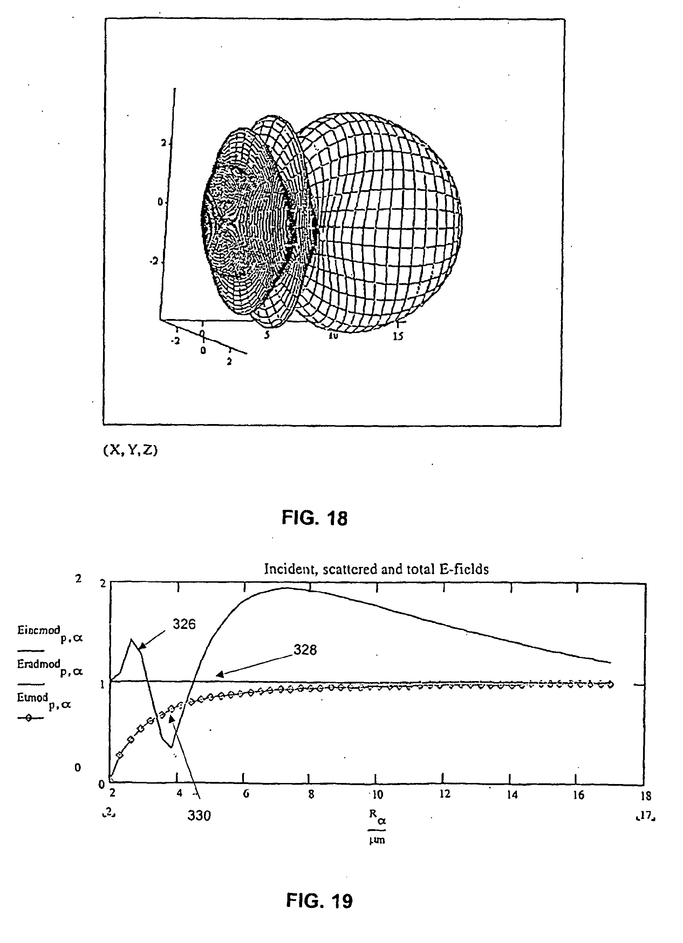

Fig. 9 is a cross sectional view taken across the tracks of the transmissive optical bio-disc embodiment of the optical bio-disc 110 according to the present invention, as described in Fig. 8A. This view is taken longitudinally along a radius and flow channel of the optical bio-disc. Fig. 9 illustrates the substrate 120 and the thin semi-reflective layer 143. This thin semi-reflective layer 143 allows the incident or interrogation beam 152, from the light source 150, to penetrate and pass through the optical bio-disc to be detected by the top detector 158, while some of the light is reflected back in the form of the return beam 154. The thickness of the thin semi-reflective layer 143 is determined by the minimum amount of reflected light required by the optical bio-disc reader to maintain its tracking ability. The substrate 120 in this embodiment, like that optical bio-discussed in Fig. 19, includes the series of grooves 170. The grooves 170 in this embodiment are also preferably in the form of a spiral extending from near the center of the optical bio-disc toward the outer edge. The grooves 170 are implemented so that the interrogation beam 152 may track along the spiral. Fig. 9 also shows the active layer 144 applied over the thin semi-reflective layer 143. As further illustrated in Fig. 9, the plastic adhesive member 118 is applied over the active layer 144. Fig. 9 also shows the cap portion 116 without a reflective surface 146. Thus, when the cap is applied to the plastic adhesive member 118 including the desired cutout shapes, the flow channel 130 is thereby formed and a part of the incident beam 152 is allowed to pass therethrough substantially unreflected.

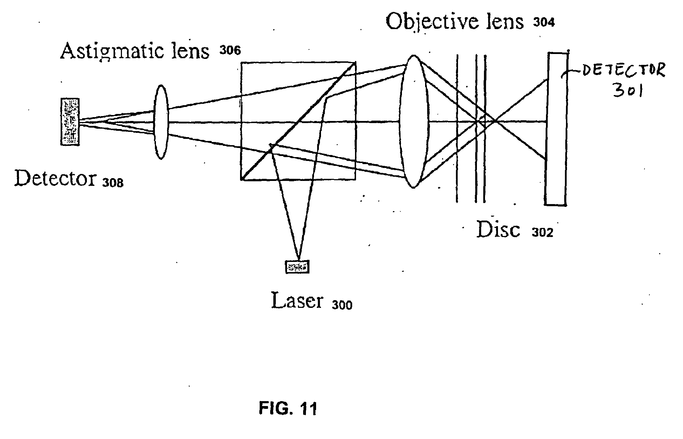

Fig. 10 is a view similar to Fig. 8A showing the entire thickness of he transmissive optical bio-disc and the initial refractive property thereof. Grooves 170 are not seen in Fig. 10 since the sections are cut along the grooves 170. Fig. 10 shows the presence of the narrow flow channel 130 that are situated perpendicular to the grooves 170 in this embodiment.

Figs. 9 and 10 show the entire thickness of the transmissive optical bio-disc. In these Figs., the incident beam 152 is illustrated initially interacting with substrate 120 which has refractive properties that change the path of the incident beam as illustrated to provide focusing of the beam 152 on the thin semi-reflective layer 143.

## Imaging Of Spheres

A theory of the imaging of spheres in an optical disc player has been developed. This allows the calculation of the signals measured in the optical bio-disc platform of the present invention, in the transmissive disc embodiment for any type of spherical particle, and gives a guide to the response to other objects.

The theory is based on a full solution to Maxwell's equations in the optical disc player in the neighborhood of the imaged particle. It, therefore, automatically includes the polarization effects in optical recorders from laser to particle to detector. The calculated signals are those from the detector itself.

## Brief Summary of Model

The optical path that has been simulated is shown in Fig. 11. The numerical apertures, wavelengths etc. are those of a CD-RW recorder. The various stages in the transmission of light from laser to the detector may be conveniently sub-divided as follows:

1. Laser 300 illuminates the objective entrance pupil.
2. Objective-lens 304 focuses the light into the region of the reading surface of disc 302 near which the spherical particle is located.
3. The sphere (not shown in Fig. 11), which rests on a surface inside the disc material, scatters the light over a range of angles, and both the surface of the disc and mirror reflect the light back towards the objective lens. The portion of the light that is transmitted through the disc hits the detector 301.
4. Objective lens 304 captures the reflected light, and directs it towards detector 308.
5. An optical element, usually a lens or parallel plate, introduces an aberration into the beam (astigmatism) which is used to generate the focus error signal. This optical element is represented by astigmatic lens 306 in Fig. 11.
6. Detector 308 captures the light. Only the light that is reflected through the objective lens 304 and finally hits detector 308 is registered as a signal in the optical recorder.

This procedure is repeated for each lateral position of the spot as it scans across the particle, and the variation in the amount of light hitting the detector gives the signal seen.

## Key Ingredients in Model

There are three key ingredients in making a model of this imaging process:

1. A description of the focused beam in a way that allows calculation of its interaction with the sphere. It turns out that the easiest way of doing this is to divide the beam into the sum of plane waves, which are simple waves moving in one direction.
2. The second stage is to describe how a plane wave interacts with the sphere. This is a well-known problem, and standard results are available. However, it takes a little more effort to understand the results and so examples will be given,
3. Finally, the amount of light collected by the objective lens and directed onto the detector must be calculated, including the distortion caused by the astigmatic element. Also the amount of light collected by the top detector is calculated. This problem can also be solved quantitatively.

In the present invention, the method, as applied to the transmissive optical disc system, is as described above except that the final stage is not needed. Each of these three stages will be described, with example results. However, first a sample final result is given to illustrate the function of the model.

**Example Result: Image of a 3 $\mu$m PMMA (Polymethyl**

**methacrylate) Sphere**

The image from a 3 $\mu$m PMMA sphere has been calculated in reflection from an optical bio-disc. It is found that the imaging mechanism is not primarily reflected from the sphere itself, but rather (1) the transmission through the sphere and (2) reflection from the mirror spaced some 25 $\mu$m behind it. In geometric terms, at the edge of the particle the light is refracted away from the beam to miss the capture lens, and therefore does not reach the detector. Hence the image is of a DARK RING at the edge of the particle, with a light center. The exact level of the background and the center of the image depend upon the position of the mirror (which determines how much light reaches the detector, due to defocusing), and the size of the particle.

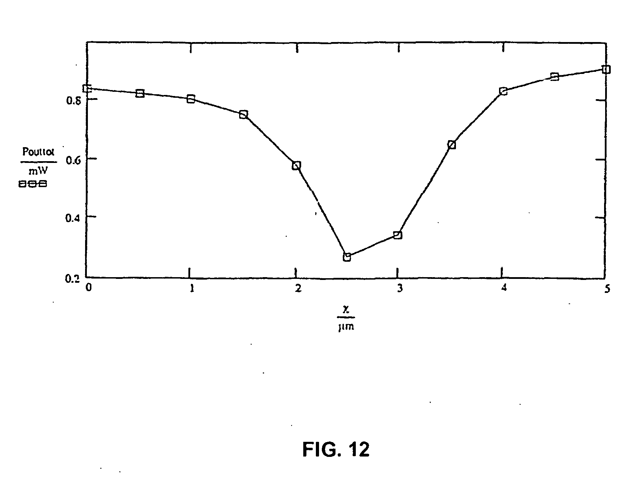

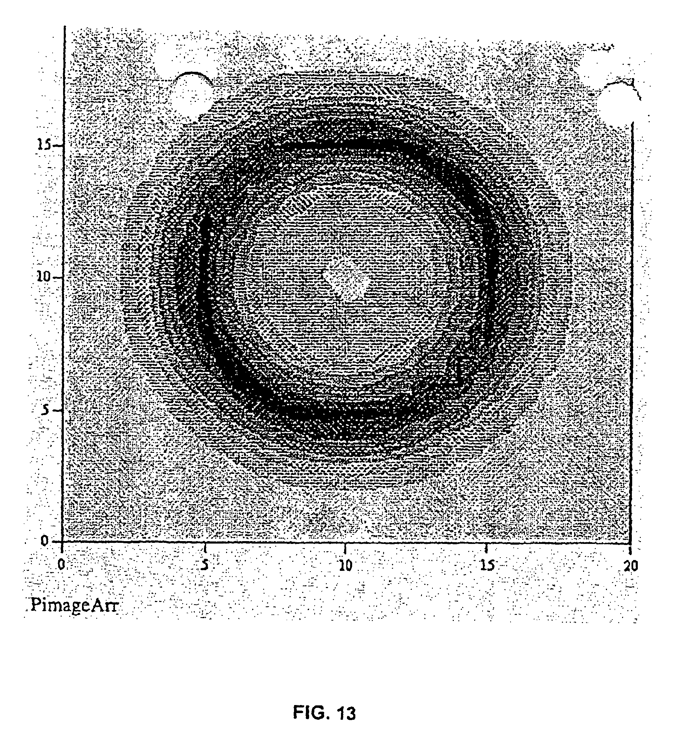

Fig. 12 is a line plot of the signal across the detector showing a reduction in the signal. The actual reflection values depend upon the astigmatism in the detection branch, but the principle remains the same. Fig. 13 shows the image of the particle as detected by the system. As shown, the calculated image of a 3 $\mu$m PMMA particle is dominated by light transmitted through the particle and light reflected off the back mirror.

**Imaging and the Focused Light Spot**

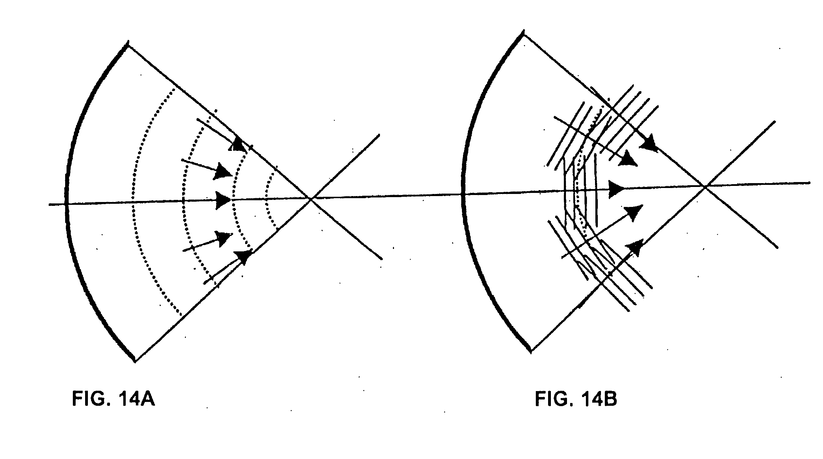

A fundamental result of the electromagnetic theory of focused light is that in the region of focus the light can be expressed as a sum of plane waves. In pictorial terms, this is shown in Figs. 14A and 14B. Fig. 14A shows that a focused beam may be modeled as a converging spherical wave. Fig. 14B shows that the same focused beam may be modeled as sum of plane waves.
The mathematical representation has the form:

$$\text{Focused beam} := \sum_{\text{angles}} (\text{parallel beams})$$

The advantage of considering the focused beam as a sum of plane waves is that it is frequently considerably easier to work out how a plane wave interacts with an object than it is for a spherical wave. For example, when the focused beam hits the surface of an unwritten CD-R disc, it sees a series of grooves. For a plane wave, this is just a diffraction grating, which diffracts plane waves into a series of discrete angles. The total reflected beam is then simply the sum of a series of diffracted beams. It is considerably less obvious how a 1 $\mu$m wide spot would react to a 1.6 $\mu$m wide groove without taking this approach.

For the present case of interaction with a sphere, the same situation arises. The interaction of a plane wave with a sphere has been rigorously solved, which offers a way of solving the interaction of a focused beam with the sphere. Mathematically this is represented in the form:

$$\text{Interaction of focused beam with sphere} := \sum_{\text{angles}} \text{interaction of plane wave with sphere}\,(\text{Mie Theory})$$

We will next consider this simplified case, which goes by the name of Mie Theory after the scientist who first solved it.

**Mie Theory: Scattering From a Sphere**

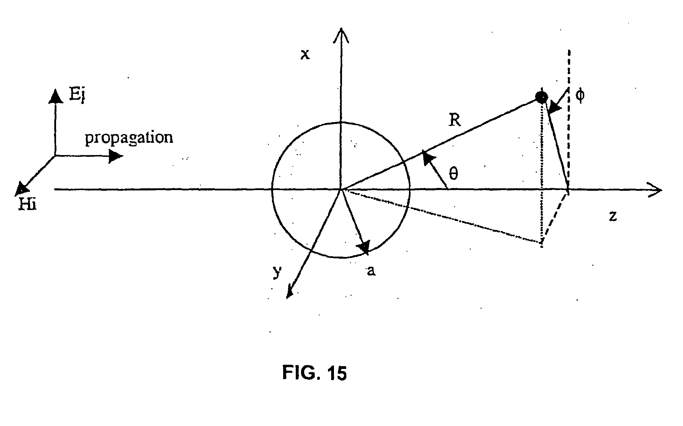

The scattering of an incident plane wave by a sphere was calculated by Mie in 1908, using a rigorous application of electromagnetic theory. The equations based on those given in Bom and Wolf (Principles of Optics, p. 635-664). The solutions are in the form of equations for the electric and magnetic fields of the scattered waves through the three-dimensional space around the particle. It turns out that the easiest way to represent the fields is using 'spherical polar' co-ordinates rather than the more familiar Cartesian coordinates. These are expressed in terms of the angle between the incident beam and the scattered beam ($\theta$), the angle between the plane of polarization of the incident beam and the scattered beam ($\phi$), and the radius ($r$), as shown in the Fig. 15. Hence the electric fields are described by the components ($E_\theta$, $E_\phi$, $E_r$). Fig. 15 shows the incident beam ($E_i$, $H_i$) and the spherical polar co-ordinate system.

At large radii compared to the particle size, as is the case in an optical recorder, these functions may be somewhat simplified; and the radial component of the field vanishes. There are then direct relations between the magnetic and electric vectors, such that you only need to specify one of the two. The results are then finally in the simple form:

$$E_\theta := E_0 \Box F(\theta) \Box \cos(\phi) \Box \frac{e^{ikr}}{r}$$

and an equivalent equation for the $\phi$ component.

This shows that there is a plane wave ($e^{ikr}$) whose amplitude drops off as 1/r; this wave varies as the cosine of $\phi$ and shows a (complicated) dependence on $\theta$ described by the function $F(\theta)$. This latter function is the one of primary interest, since it describes how the intensity of scattered light varies with the angle by which the light is scattered. Now, some examples of the results of these equations in both the near-field (low r) and far-field (large r) limits will be given.

**Angular Dependence of Scattering**

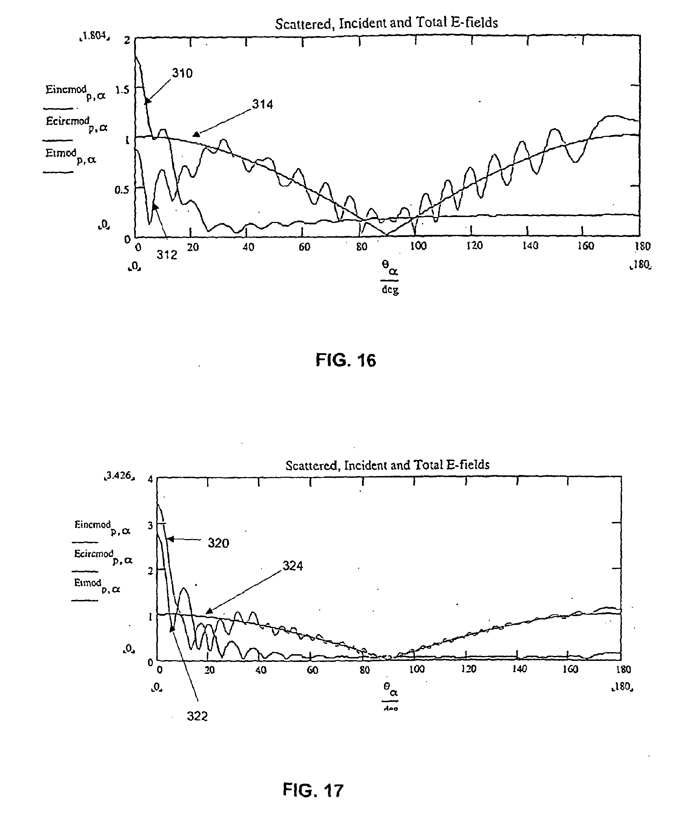

The first result shown is for the scattering from a 2$\mu$m metal sphere. Fig. 16 is a plot showing the modulus of the electric field as a function of angle for a fixed radius (at $\phi$ = 0). Three values are shown: the incident light (310), the scattered light (312), and the resultant total electric field strength (314). The scattering is shown as a function of angle at 6 $\mu$m from a 2 $\mu$m metal sphere.

Some general features are observed that are important in the imaging of particles:

1. The scattered light oscillates as a function of angle. This corresponds to 'standing wave' patterns in the E-field around the particle.
2. There is a strong forward scattering in E($\theta$), which when added to the incident field results in a reduction in the light that continues forward - this is essentially the shadow of the sphere.
3. Other calculations show that as the radius of measurement decreases, the electric field reduces to zero, as required from the boundary conditions at a metal surface.

Fig. 17 shows the same type of plot as Fig. 16, but for the scattering from a dielectric sphere (PMMA). Three values are shown: the incident light (320), the scattered light (322), and the resultant total electric field strength (324). These plotted values show a similar oscillatory pattern as for the metal, with one important difference: at low angles (transmission through the sphere) electric field is not reduced (shadow) but increased.

Around the bright central region at $\theta$ = 0 to 10 degrees, there is a darker region ($\theta$ =10 to 30°). Given that the numerical aperture of optical recorders (NA ~ 0.5) corresponds to about 20°, this already suggests that particles will show a bright center with a dark ring around it when viewed in transmission in an optical recorder.

Three-dimensional plots of the scattered E-field give a good impression of the oscillations with angle. The 3D image shown in Fig. 18 is the scattered electric field for a 0.5 $\mu$m metal particle.

**Radial Dependence of Scattering**

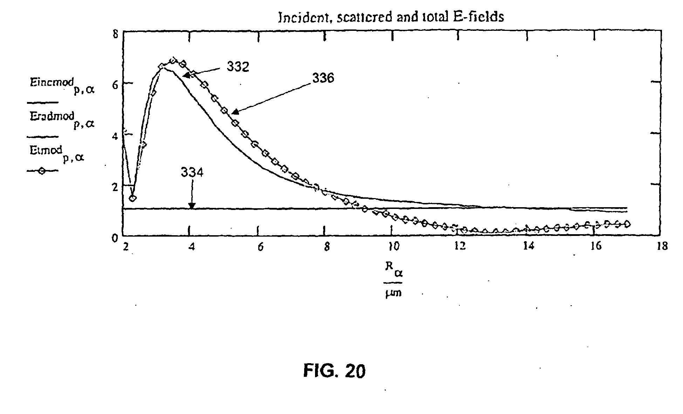

The electric fields show strong oscillations as a function of radius, until at larger radii the scattered field drops as the inverse of the radius, and the total field approaches the incident field. The situation for dielectrics and metals are very different, as can be seen from Figs. 19 and 20. Fig. 19 shows the tangential E-field outside a metal as a function of radius while Fig. 20 shows the tangential E-field outside a dielectric as a function of radius. In Fig. 19, plot 326 shows the total E-field, plot 328 shows the incident E-field and plot 330 shows the scattered E-field. In Fig. 20, plot 332 shows the total E-field, plot 334 shows the incident E-field and plot 336 shows the scattered E-field. The dielectric (Fig. 20) shows a very strongly enhanced field behind the sphere, rising to a factor of six higher than the incident field in the example given. The metal (Fig. 19) shows a reduction in field as the surface is approached, since it must fall to zero at the surface of the metal itself.

The increase in field strength behind the dielectric sphere may be simply understood from geometric optics: the sphere is acting as a lens, and focusing light behind it. This leads to a key point in understanding the behavior of the dielectric particle - it is essentially a small lens. This will be important for understanding the images of the particles.

**Imaging of the Spheres**

The basic components are now in place to understand how a sphere is imaged. There are two stages to understanding. The first stage is to calculate what light is reflected back into the objective lens pupil. Since the light is leaving the region in which it was focused by the lens, this is referred to as the 'exit pupil' (distinct from the entrance pupil for the light heading towards the disc). The second stage will be to calculate the light falling on the detector.

### Power in the Exit Pupil

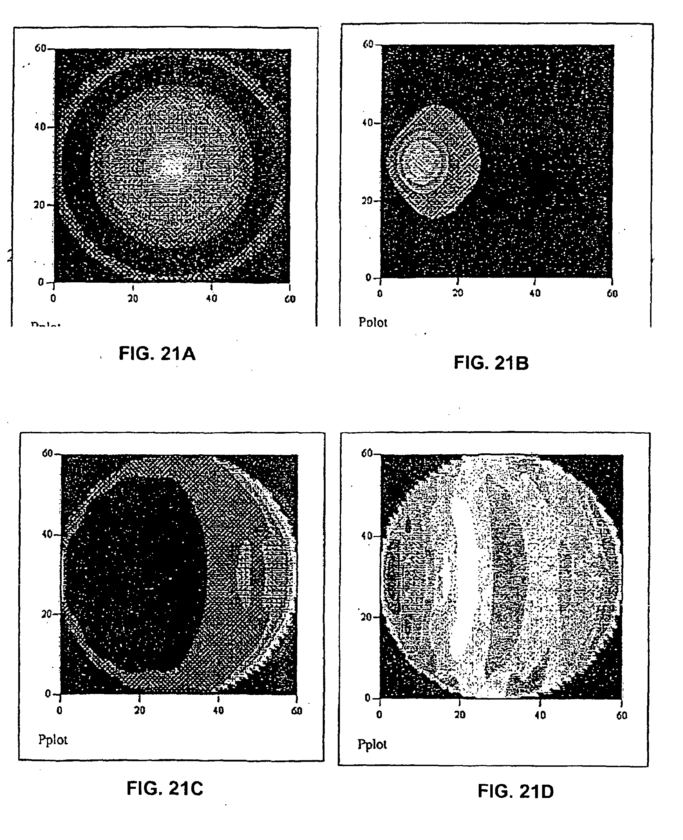

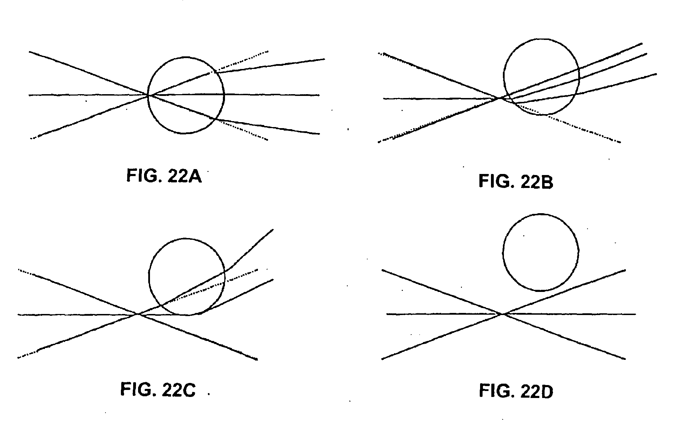

The power in the exit pupil has been calculated, including the interference with the light reflected from the mirror at the back when appropriate. Examples of these powers are given in the Figs. 21A, 21B, 21C, and 21D, where the origin of the dark ring in the recorder is seen to be due to the lateral shift of the scattered light out of the pupil. The four figures represent the intensity distribution in the exit pupil of the objective lens at 0, 1.5, 3, and 5 $\mu$m offset from the center of the 3 $\mu$m PMMA sphere. The form of figures 21A through 21D can be understood from studying corresponding Figs. 22A - 22D. They are sketches of geometric rays for illustrating the focusing effect of a small sphere.

When the focused beam falls fully on the particle, it is focused into a tighter beam and deflected in the opposite direction to the displacement of the beam from the particle (Figs. 22A and 22B). When the lateral displacement is larger, much of the light that hits the particle gets deflected outside the pupil of the objective lens, and is therefore not captured. The light that misses the particle gets deflected unchanged, and therefore the outer edge of the pupil gets steadily more illuminated (Fig. 22C). When the lateral displacement is so great that the spot misses the particle, the pupil is fully illuminated by light reflected by the mirror (Fig. 22D).

Now one can understand the general result shown in Figure 2. In the center of the particle all the light is reflected back through the lens. As the spot moves sideways, some of it is deflected out of the collection angle, and so the signal falls. Finally, as more of the light misses the detector altogether, the signal rises again.

### Intensity Distribution on the Detector

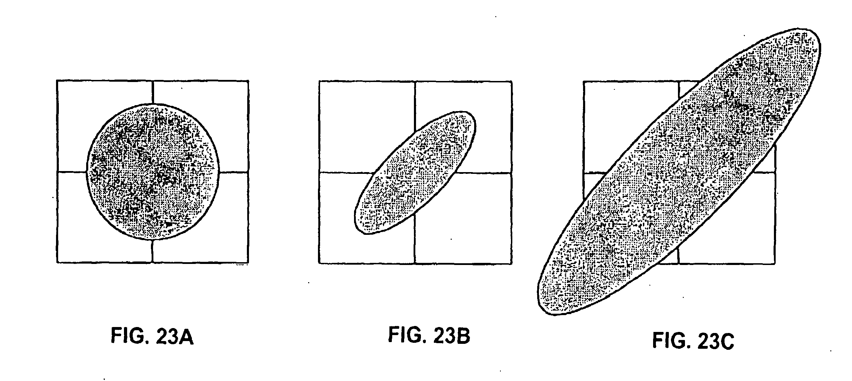

The light going through the objective lens pupil is, however, insufficient, since not all this light strikes the detector. The main cause of the light missing the detector is that it is defocused, and therefore forms a large, diffuse spot in the region of the detector. On top of this, the astigmatism added in order to generate a focus signal also makes the spot larger, although the design ensures that without defocus all the light still hits the detector. This is shown schematically in Figs. 23A, 23B and 23C. Fig. 23A presents a spot that is in focus. Fig. 23B presents a spot that has a small defocus. Fig. 23C presents a spot that has a large defocus and signal reduction.

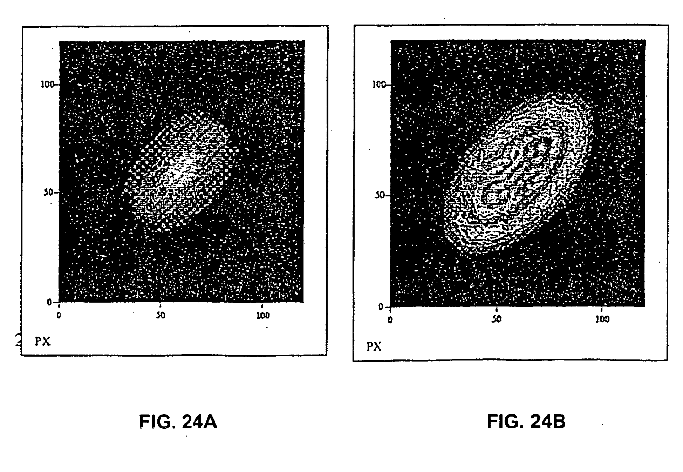

The calculation of the signal on the detector involves taking the Fourier Transform of the electric field in the exit pupil of the objective lens, and adding aberrations to simulate the astigmatic focus element. Examples of the signal on the detector are shown in Figs. 24A and 24B. Fig. 24A shows the intensity distribution on the detector at 0 $\mu$m offset of the focused spot from the center of the PMMA sphere. Fig. 24B shows the intensity distribution on the detector at 5 $\mu$m offset of the focused spot from the center of the PMMA sphere.

When the spot is focused on the center of the particle (Fig. 24A), the lens effect described above acts to reduce the size of the spot on the detector, since the light is focused into lower angles. As the spot moves sideways, there is a lateral offset, until in Fig. 24B the spot misses the particle altogether. Due to reflection from the mirror some 25 $\mu$m behind the disc surface, there is in total the equivalent of 50 $\mu$m defocus present, and this results in a very large spot, much of which misses the detector.

### Transmissive Detector

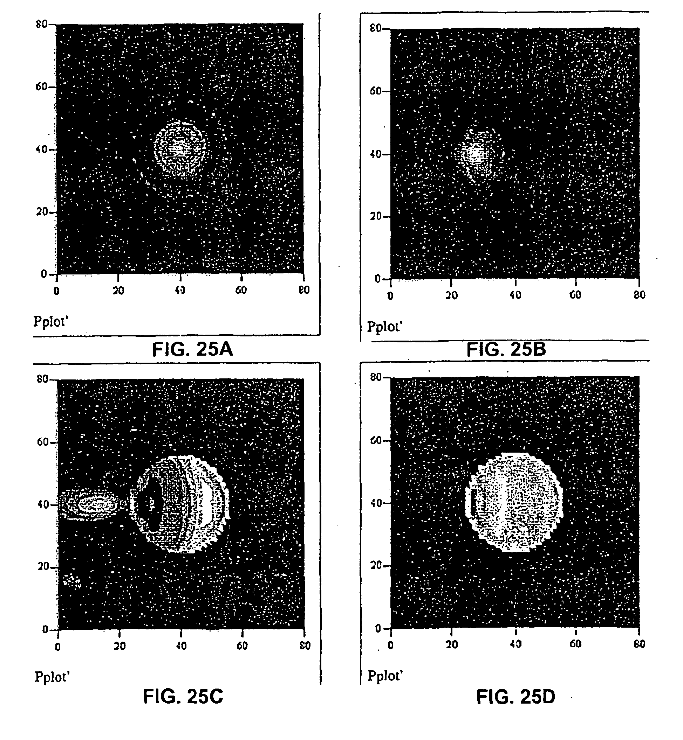

If the detector is placed behind the disc, it is not necessary to include the detection branch with its astigmatic element. However, since the light does not need to pass back through the objective lens, the collection angle can be much larger. It is possible to make images of the spot on a detector (or screen) placed behind the disc, and examples are shown below in Figs. 25A, 25B, 25C and 25D. Shown in these figures are the representation of the transmitted light up to an angle of 77 for lateral positions of the spot of 0 $\mu$m (Fig. 25A), 2 $\mu$m (Fig. 25B), 3.5 $\mu$m (Fig. 25C) and 5 $\mu$m (Fig. 25D), for a 3 $\mu$m PMMA particle.
This series of images can be described as follows:

1. For the spot centered on the front surface of particle (Fig. 25A), the lensing effect leads to a narrow emission angle. This spot can be compared to Fig. 25D, where the full NA is seen.
2. If the particle is moved sideways (Fig. 25B), the spot is displaced sideways in the opposite direction, as explained earlier in the discussion with the power in the exit pupil.
3. At 3 $\mu$m offset (Fig. 25C), the light that hits the particle is scattered at a high angle (some 50°), whilst the rest carries on to leave an illuminated arc.
4. At 5 $\mu$m (Fig. 25D), the spot misses the particle and an area corresponding to the input NA is illuminated.

Thus, a theory of imaging of spherical particles in an optical recorder has been developed. This model is based on rigorous electromagnetic theory and the theory of microscope imaging, and tracks the light from laser to detector for the transmissive optical systems in the present invention. With this model it is possible both to understand the behavior of the optical bio-disc reader platform, and to design improved detector and drive configurations.

**Forward Relief Transmissive Disc**

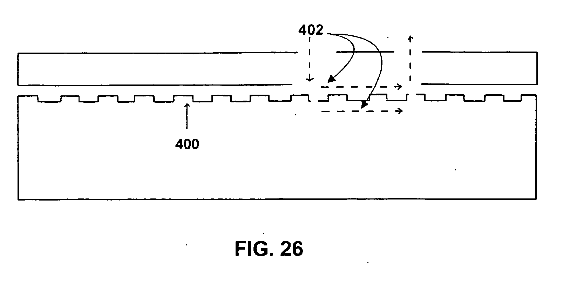

Fig. 26 is a cross-sectional simplified view of a forward relief transmissive optical bio-disc embodiment of the present invention. As with other optical bio-disc embodiments, a fluidic flow design is needed to allow washing of biological samples in conducting assays. For example, chemical solutions are injected into the optical bio-disc to wash away protein not captured by the antigens after chemical reactions/mixing. As shown in Fig. 26, in the forward relief transmissive optical bio-disc, the fluidic flow 402 can be above or below operation features 400. Thus there are two embodiments, one where fluid flows above the operational features and the other where fluid flows below the operational features. The operational features can be pits, lands, grooves or zones, depending on the types of optical disc technology used.

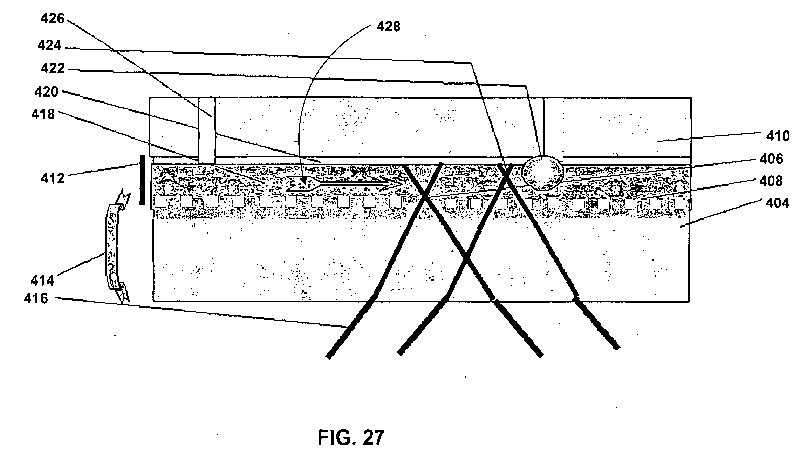

Fig. 27 is a more detailed cross-sectional view of the embodiment of the forward relief transmissive optical bio-disc where fluid flows above the operational features. There are five main components. From top to bottom they are: (1) cover layer 410, (2) final reflective layer 420, (3) sample/fluidic area 418, (4) transmissive operational features 408, and (5) lens component layer 404. Fluids and investigational/biological samples are inserted into the bio-disc through sample inlet holes 426 carved out of cover layer 410. The fluidic flows through sample/fluidic area 418. An example investigational feature 426 is shown to be lodged in the sample/fluidic area 418, which is within focal zone 412 of the disc. Arrow 428 indicates the direction of the flow. Laser 416, which comes from the objective assembly of the optical disc drive, enters the bio-disc through lens component layer 404 first before getting to operational features 408. The operational features are coated with a transmissive layer, making operational features 408 transmissive. In one embodiment, the transmissive layer is a thin layer of gold. In another embodiment, the transmissive layer is made of glass. Some of laser 416 is reflected back by transmissive operational features 408, with the reflected laser returning to the detector of the disc drive and used for operations such as focus and tracking. Most of laser 416 passes through transmissive operational features 408 and can be used to characterize investigational feature 426 (or any samples) in sample/fluidic area 418.

Optically, the characterization of the samples is possible because sample/fluidic area is within focal zone 412 of laser 416. Final reflective layer 420 reflects back laser 416 that passes through the focal zone. The reflected laser returns to the detector of the optical disc drive. Focal plane 424 of laser 416 may roam below, at or above operational features 408. These three regions allowed by the objective assembly all fall within focal zone 412.

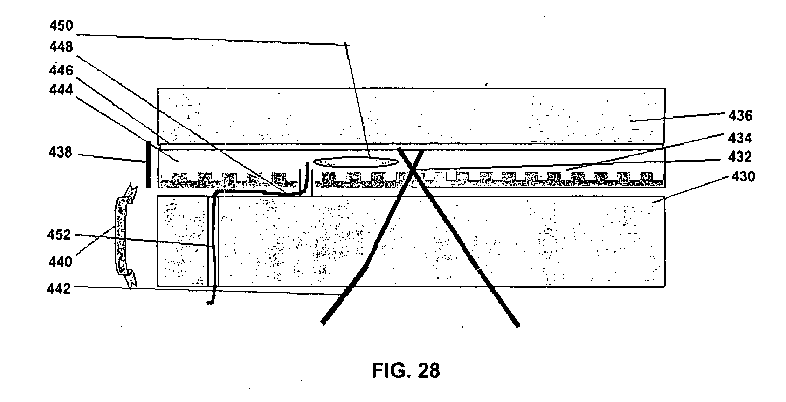

Fig. 28 is a more detailed cross-sectional view of the embodiment forward relief transmissive optical bio-disc where fluid flows below the operational features. There are five main components. From top to bottom they are: (1) cover layer 436, (2) final reflective layer 446, (3) sample/ fluidic area 444, (4) transmissive operational features 434, and (5) lens component layer 430. Fluids and investigational/biological samples are inserted into the bio-disc through sample inlet holes 452 carved out of lens component layer 430. The fluidic flows through sample/fluidic area 444. An example investigational feature 450 is shown to be lodged in the sample/fluidic area 444, which is within focal zone 438 of the disc. Laser 442, which comes from the objective assembly of the optical disc drive, enters the bio-disc through lens component layer 430 first before getting to operational features 434. The operational features are coated with a transmissive layer, making operational features 434 transmissive. In one embodiment, the transmissive layer is a thin layer of gold. In another embodiment, the transmissive layer is made of glass. Some of laser 442 is reflected back by transmissive operational features 434, with the reflected laser returning to the detector of the disc drive and used for operations such as focus and tracking. Most of laser 442 passes through transmissive operational features 434 and can be used to characterize investigational feature 450 (or any samples) in sample/fluidic area 444.

Optically, the characterization of the samples is possible because sample/fluidic area is within focal zone 438 of laser 442. Final reflective layer 446 reflects back laser 442 that passes through the focal zone. The reflected laser returns to the detector of the optical disc drive. Focal plane 432 of laser 442 may roam below, at or above operational features 434. These three regions allowed by the objective assembly all fall within focal zone 438.

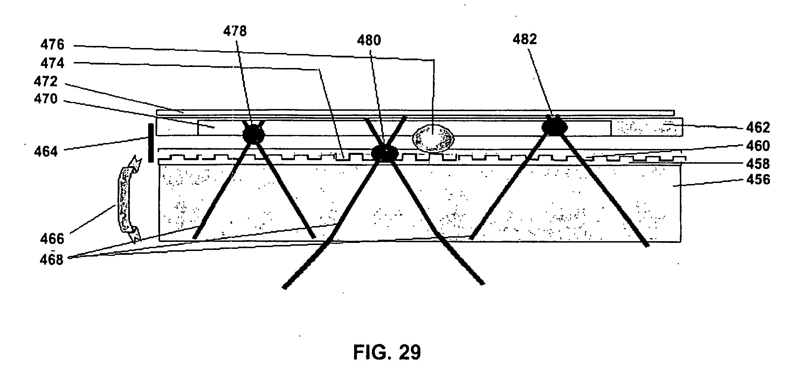

Fig. 29 further illustrates the roaming property of the focal plane. The view of the optical bio-disc presented is similar to Figs. 27 and 28. There are three example places that where laser 468 can focus, point 478, point 480 and point 482. These points represent, the point of greatest reflectance. Point 478 is at the plane of investigational feature 476. Point 480 is at operational features 460. Point 482 is at the top of sample / fluidic area 470. The three points are located in the three regions of roaming: above operational features 460, below operational features 460 and at operational features 460. This range offers flexibility for characterizing investigational features and samples in sample/fluidic area 470.

**Transmissive Disc and Multiple Layers**

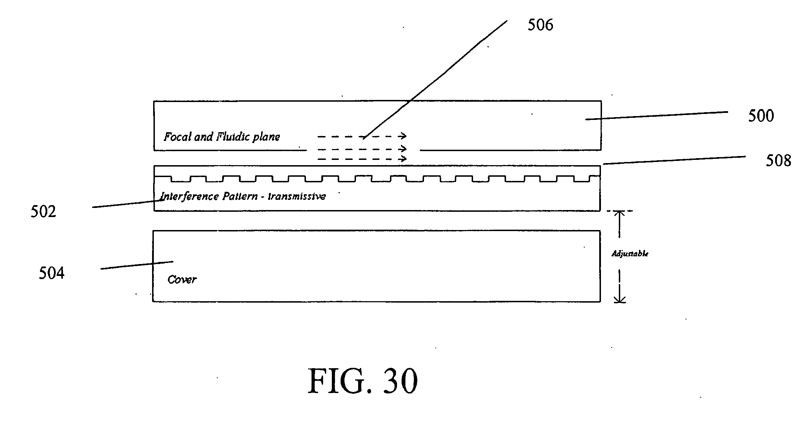

Fig. 30 is a cross-sectional simplified view of a forward relief transmissive bio-disc embodiment showing multiple layers. For top to bottom these are: (1) focal and fluidic plane 500; (2) interference pattern (transmissive) layer 502; and (3) cover layer 504. As with other disc embodiments, a fluidic flow design is needed to allow washing of biological samples in conducting assays. For example, chemical solutions are injected into the disc to wash away protein not captured by the antigens after chemical reactions/mixing. According to one embodiment and seen in Fig. 30, the fluidic flow 506 is above operation features 508. According to another embodiment, the fluidic flow 506 is below the operation features 508. The figure also shows a transmissive layer that contains the operation features that can be pits, lands, grooves or zones, depending on the type of optical disc technology used. Also seen in the figure is cover layer 504 whose thickness can be adjustable.

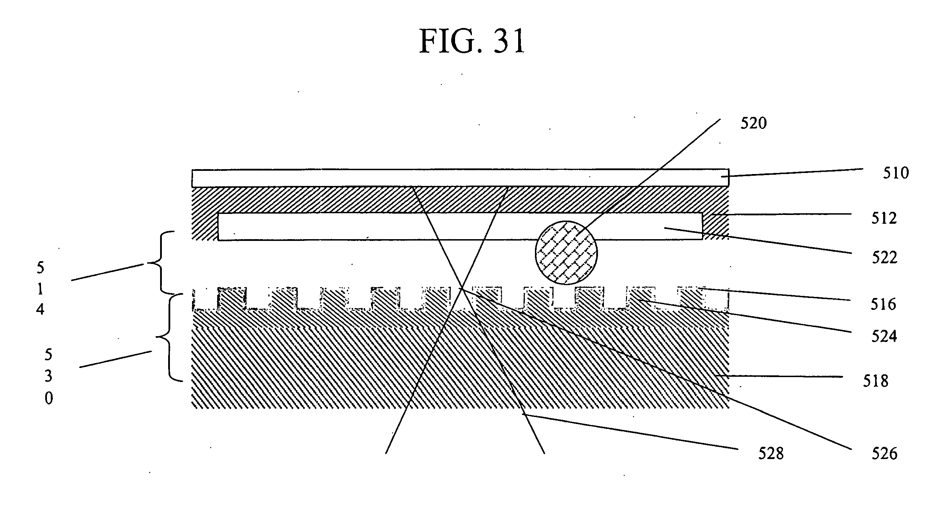

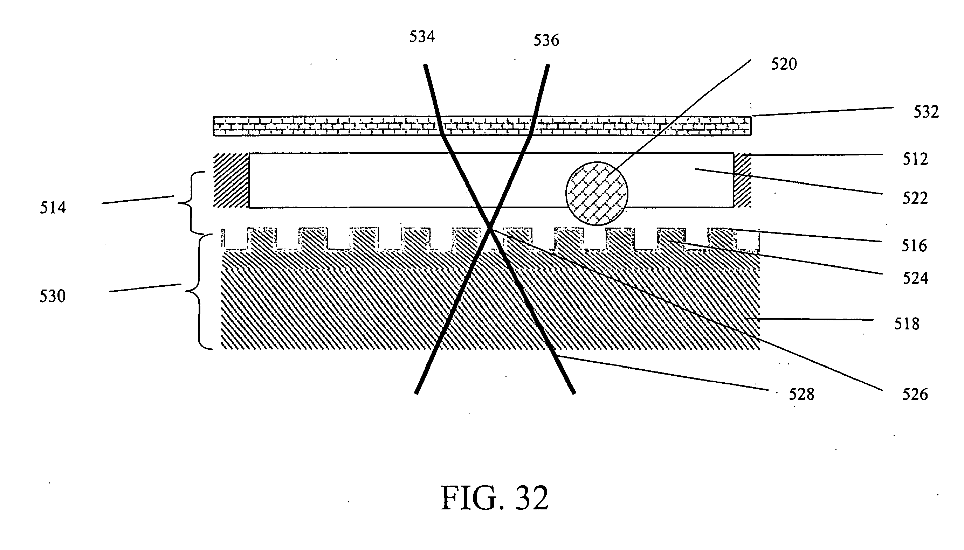

According to one embodiment, the forward relief transmissive optical bio-disc has a reflective top-most layer. This embodiment is seen in Fig. 31. According to this embodiment, the detector for detecting light reflected from the capture zone is on the same side as the light source. In other words the detector is below the transmissive optical bio-disc. According to another embodiment, the forward relief transmissive optical bio-disc has a refractive top-most layer. This embodiment is seen in Fig. 32. According to this embodiment, the detector for detecting light reflected from the capture zone is on the opposite side of the light source. In other words, the transmissive optical bio-disc is in between the light source and the detector.

Fig. 31 is a more detailed cross-sectional view of a transmissive optical bio-disc showing a laser 528, which comes from an objective assembly (not shown) of an optical disc drive, entering the bio-disc through lens component layer 518 before passing through three other layers before it reaches the final reflective layer 510 where the laser light is reflected back towards the lens component layer and captured by a detector (not shown) of the disc drive to be used for such operations as focus and tracking. The three other layers above the lens component layer, from bottom to top, are: (1) transmissive layer 516; (2) focal zone layer 514; and (3) cover layer 512. An example investigational feature 520 is lodged in the sample or fluidic area 522 that is part of the cover layer 512. Fig. 31 also shows the embodiment seen supra where the fluidic area 522 is above the operational features 524. This example investigational feature is within the focal zone 514 of the disc, which lies just above the focal lens distance 530 of the disc. The figure also shows the primary focal plane 526 of the disc to lie within the transmissive layer 516 of the disc.

In operation, the operational features 524 are coated with transmissive layer 516, making the operational features transmissive. In one embodiment, this transmissive layer is made of gold. In another embodiment, this transmissive layer is made of glass. All the light from the laser is reflected back by the final reflective layer 510 to a detector (not shown) placed below the optical bio-disc. This detector captures, amongst other things, the images of the investigational features 520 when it encounters them.

Figure 32 is similar to Fig. 31 supra with just one difference. The top-most layer of the transmissive disc shown in this figure has a refractive layer 532 instead of a reflective layer 530 seen in Fig. 31. Because of this refractive layer, most of the laser light can now be transmitted through the top of optical bio-disc, and this is clearly shown by lines 534 and 536 of the laser light 528. Some of the light returns back towards the lens component layer and is captured by a detector (not shown) of the disc drive to be used for such operations as focus and tracking. The remaining features of the transmissive disc shown in this figure are the same as the ones shown in Fig. 31.

**Claims**

1. An optical bio-disc (110), comprising:

    a lens component layer (518);
    an operational structure layer comprising one or more operational structures (524) disposed on a top surface of the lens component layer (518);
    a thin semi-reflective layer (516) substantially covering the operational structures (524);
    a cover layer (512) spaced apart from the semi-reflective layer (516) so as to form a sample analysis chamber between the semi-reflective layer (516) and the cover layer (512);
    a reflective layer (510) positioned over the cover layer (512);
    one or more samples (520) within the sample analysis chamber;
    and a focal zone (514) comprising at least a portion of the operational structure layer and at least a portion of the sample analysis chamber, wherein the lens component layer (518) focuses light received from a light source substantially within the focal zone (514) so that light reflected from the reflective layer (510) is usable to generate information regarding the one or more samples (520) located in the sample analysis chamber.

2. The optical bio-disc (110) according to Claim 1 wherein the thin semi-reflective layer (110) is selected from the group comprising metals, semi-conductors, and dielectric layers.

3. The optical bio-disc (110) according to Claim 2 wherein said metals is selected from the group comprising gold, aluminum, silver, nickel and reflective metal alloys.

4. The optical bio-disc (110) according to Claim 2 wherein said semi-conductors is selected from the group comprising silicon and germanium.

5. The optical bio-disc (110) according to Claim 2 wherein said dielectric layers is a multi-layer dielectric film.

6. The optical bio-disc (110) according to Claim 5 wherein said multi-layer dielectric film is selected from the group comprising silicon dioxide, zinc sulfide and tantalum oxide.

7. The optical bio-disc (110) according to any one of Claims 1 to 6 wherein said thin semi-reflective layer (516) is between 20 to 300 Angstroms thick.

8. The optical bio-disc (110) according to Claim 1 wherein the operational structures (524) are readable by a disc drive assembly (112) to control rotation of the optical bio-disc.

9. The optical bio-disc (110) of Claim 1, further comprising:

   a target zone (140) disposed between the center and the outer edge;
   an active layer (144) formed on the surface of said thin semi-reflective layer (516) and
   at least one capture probe that binds to said active layer (144) such that the capture probe is immobilized on said active layer (144) within the target zone (140) to thereby form a capture zone.

10. The optical bio-disc (110) of Claim 1 wherein said cover layer (512) is transparent.

11. The optical bio-disc (110) of Claim 10 wherein said cover layer (512) has molded thereto one or more channels such that when the cover layer is coupled to the reflective layer (516) fluidic channels are formed.

12. The optical bio-disc of Claim 1, further comprising one or more sample inlet ports extending through the cover layer and the reflective layer, wherein the sample inlet ports provide access to the sample analysis chamber so that samples may be introduced to the sample analysis chamber via one or more of the sample inlet ports.

13. A light transmissive optical bio-disc (110) and drive (112) system, the system comprising:

   a light transmissive optical bio-disc (110) comprising;
   a substantially circular substrate having a center and an outer edge, the substrate comprising operational structures (524) on a top surface;
   a thin semi-reflective layer (516) substantially covering the operational structures (524);
   a cap portion (512) integrally attached to the thin semi-reflective layer (516) by an adhesive member, the adhesive member having one or more portions removed, thereby forming one or more channels (522) defined therebetween; and
   one or more capture probes immobilized on the thin semi-reflective layer (516), the capture probes defining capture zones within the one or more channels (522); and
   a disc drive (112) comprising:

      a light source (150) for directing light to said capture zones;
      a detector system for detecting light reflected from or transmitted through the optical bio-disc at the capture zones; and
      a processor (166) coupled to the detector system, the processor receiving signals from the detector system indicative of the light incident on the detector system, the signals usable to count items in a sample bound to the capture probes

14. The system according to Claim 13 wherein said detector system is comprised of a detector and optical components.

15. The system of Claim 14 wherein said optical components direct light to said detector.

16. The system of Claim 13 further comprising a cover layer positioned over the operational structures on the top surface of the substrate.

17. The system of Claim 16 further comprising a refractive layer positioned over the cover layer

18. The system of Claim 13 wherein the detector system is located on the opposite side of the light source for detecting light transmitted through the capture zones of said transmissive optical bio-disc (110)

19. The system of Claim 13 wherein the transmissive operational features layer is selected from the group comprising reflective metals, semi-conductors, and dielectric layers.

20. The system of Claim 13 further comprising a lens component (518) disposed over the substrate.

21. The system of Claim 13 wherein the operational structures are substantially light transmissive.

**Patentansprüche**

1. Optische Bioscheibe (110) mit
einer Linsenbestandteilsschicht (518),
einer Betriebsstrukturschicht mit einer oder mehreren, auf der Oberseite der Linsenbestandteilsschicht (518) angeordneten Betriebsstruktur(en) (524),
einer dünnen, die Betriebsstrukturen (524) im wesentlichen bedeckenden Halbreflexionsschicht (516),
einer von der Halbreflexionsschicht (516) beabstandeten Deckschicht (512) zur Bildung einer Probenanalysenkammer zwischen der Halbreflexionsschicht (516) und der Deckschicht (512),
einer über der Deckschicht (512) angeordneten Reflexionsschicht (510),
einer oder mehreren Proben (520) in der Probenanalysenkammer und
einer Brennzone (514), die wenigstens einen Teil der Betriebsstrukturschicht und wenigstens einen Teil der Probenanalysenkammer umfaßt, wobei die Linsenbestandteilsschicht (518) aus einer Lichtquelle empfangenes Licht in der Brennzone (514) so fokussiert, daß von der Reflexionsschicht (510) reflektiertes Licht zur Erzeugung von Informationen über eine oder mehrere in der Probenanalysenkammer befindliche Proben dienlich ist.

2. Optische Bioscheibe (110) nach Anspruch 1, bei der die dünne Halbreflexionsschicht (516) aus der Metalle, Halbleiter und dielektrische Schichten umfassenden Gruppe ausgewählt ist.

3. Optische Bioscheibe (110) nach Anspruch 2, bei der die Metalle aus der aus Gold, Aluminium, Silber, Nickel und reflektierenden Metalllegierungen bestehenden Gruppe ausgewählt sind.

4. Optische Bioscheibe (110) nach Anspruch 2, bei der die Halbleiter aus der aus Silizium und Germanium bestehenden Gruppe ausgewählt sind.

5. Optische Bioscheibe (110) nach Anspruch 2, bei der die dielektrischen Schichten ein mehrschichtiger dielektrischer Film sind.

6. Optische Bioscheibe (110) nach Anspruch 5, bei der der mehrschichtige dielektrische Film aus der Siliziumdioxid, Zinksulfid Tantaloxid umfassenden Gruppe ausgewählt ist.

7. 0ptische Bioscheibe (110) nach einem der Ansprüche 1 bis 6, bei der die dünne Halbreflexionsschicht (516) 20 bis 300 Angström dick ist.

8. Optische Bioscheibe (110) nach Anspruch 1, bei der die Betriebsstrukturen (524) von einem Scheibenantriebsaggregat (112) lesbar sind, um eine Drehung der optischen Bioscheibe zu steuern.

9. Optische Bioscheibe (110) des Anspruchs 1, ferner mit
einer zwischen dem Mittelpunkt und dem äußeren Rand angeordneten Zielzone (140),
einer auf der Oberfläche der dünnen Halbreflexionsschicht (516) gebildeten aktiven Schicht (144) und
wenigstens einer Einfangsonde, die an die aktive Schicht (144) bindet, so daß die Einfangsonde auf der aktiven Schicht (144) innerhalb der Zielzone (140) immobilisiert wird, um **dadurch** eine Einfangzone zu bilden.

10. Optische Bioscheibe (110) des Anspruchs 1, bei der die Deckschicht (512) durchsichtig ist.

11. Optische Bioscheibe (110) des Anspruchs 10, bei der ein Kanal oder mehrere Kanäle an der Deckschicht (512) gebildet sind, so daß sich fluidische Kanäle bilden, wenn die Deckschicht mit der Reflexionsschicht (516) verbunden ist.

12. Optische Bioscheibe des Anspruchs 1, ferner mit einer oder mehreren sich durch die Deckschicht und die Reflexionsschicht erstreckenden Probeneinlaßöffnungen, die einen Zugang zu der Probenanalysenkammer schaffen, so daß Proben durch eine oder mehrere der Probeneinlaßöffnungen in die Probenanalysenkammer eingeführt werden können.

13. Lichtdurchlässige optische Bioscheibe (110) und Antriebssystem (112), wobei das System umfaßt:

eine lichtdurchlässige optische Bioscheibe (110) mit

einem im wesentlichen kreisförmigen Substrat mit einem Mittelpunkt und einem äußeren Rand und mit Betriebsstrukturen (524) auf einer Oberseite,

einer dünnen Halbreflexionsschicht (516), die die Betriebsstrukturen (524) im wesentlichen bedeckt,

einem Deckelteil (512), der durch ein Klebelement an der dünnen Halbreflexionsschicht (516) einteilig angebracht ist, wobei ein oder mehrere Teile des Klebelements entfernt sind, wodurch dazwischen ein oder mehrere Kanäle (522) gebildet sind, und

einer oder mehreren Einfangsonden, die auf der dünnen Halbreflexionsschicht (516) immobilisiert sind und innerhalb des einen oder der mehreren Kanäle (522) Einfangzonen begrenzen, und

einen Scheibenantrieb (112) mit

einer Lichtquelle (150), um Licht auf die Einfangzonen zu richten,

einem Nachweissystem zum Nachweis von Licht, das an den Einfangzonen von der optischen Bioscheibe reflektiert oder durchgelassen wurde und

einem mit dem Nachweissystem gekoppelten Prozessor (166), der von dem Nachweissystem Signale empfängt, die das auf das Nachweissystem auffallende Licht anzeigen und zur Auszählung von Informationseinheiten in einer an die Einfangsonden gebundenen Probe dienlich sind.

14. System nach Anspruch 13, bei dem das Nachweissystem aus einem Detektor und optischen Bestandteilen besteht.

15. System des Anspruchs 14, bei dem die optischen Bestandteile Licht auf das Nachweisgerät richten.

16. System des Anspruchs 13, ferner mit einer Deckschicht, die über den Betriebsstrukturen auf der Oberseite des Substrats angeordnet ist.

17. System des Anspruchs 16, ferner mit einer über der Deckschicht angeordneten Brechungsschicht.

18. System des Anspruchs 13, bei dem das Nachweissystem auf der entgegengesetzten Seite der Lichtquelle angeordnet ist, um das durch die Einfangzonen der durchlässigen optischen Bioscheibe (110) hindurchgegangene Licht nachzuweisen.

19. System des Anspruchs 13, bei dem die durchlässige Betriebsstrukturschicht aus der aus reflexionsfähigen Metallen, Halbleitern und dielektrischen Schichten bestehenden Gruppe ausgewählt ist.

20. System des Anspruchs 13, ferner mit einem über dem Substrat angeordneten Linsenbestandteil (518).

21. System des Anspruchs 13, bei dem die Betriebsstrukturen im wesentlichen lichtdurchlässig sind.

**Revendications**

1. Biodisque optique (110), comprenant :

une couche de composant de lentille (518) ;
une couche de structure opérationnelle comprenant une ou plusieurs structures opérationnelles (524) disposées sur une surface supérieure de la couche de composant de lentille (518) ;

une couche mince semi-réflectrice (516) couvrant sensiblement les structures opérationnelles (524) ;
une couche protectrice (512) disposée à distance de la couche semi-réflectrice (516) de façon à former une chambre d'analyse d'échantillon entre la couche semi-réflectrice (516) et la couche protectrice (512) ;
une couche réflectrice (510) positionnée sur la couche protectrice (512) ;
un ou plusieurs échantillons (520) à l'intérieur de la chambre d'analyse d'échantillon ;
et une zone focale (514) comprenant au moins une partie de la couche de structure opérationnelle et au moins une partie de la chambre d'analyse d'échantillon, dans lequel la couche de composant de lentille (518) focalise la lumière reçue depuis une source lumineuse sensiblement à l'intérieur de la zone focale (514) de sorte que la lumière réfléchie par la couche réflectrice (510) peut être utilisée pour générer des informations relatives à un ou plusieurs échantillons (520) situés dans la chambre d'analyse d'échantillon.

2. Biodisque optique (110) selon la revendication 1, dans lequel la couche mince semi-réflectrice (110) est choisie dans le groupe comprenant des métaux, des semi-conducteurs et des couches diélectriques.

3. Biodisque optique (110) selon la revendication 2, dans lequel lesdits métaux sont choisis dans le groupe comprenant l'or, l'aluminium, l'argent, le nickel et des alliages de métaux réflecteurs.

4. Biodisque optique (110) selon la revendication 2, dans lequel lesdits semi-conducteurs sont choisis dans le groupe comprenant le silicium et le germanium.

5. Biodisque optique (110) selon la revendication 2, dans lequel lesdites couches diélectriques sont un film diélectrique multicouche.

6. Biodisque optique (110) selon la revendication 5, dans lequel ledit film diélectrique multicouche est choisi dans le groupe comprenant le silicium, le dioxyde, le sulfure de zinc et l'oxyde de tantale.

7. Biodisque optique (110) selon l'une quelconque des revendications 1 à 6, dans lequel ladite couche mince semi-réftectrice (516) présente une épaisseur de 20 à 300 Angströms.

8. Biodisque optique (110) selon la revendication 1, dans lequel les structures opérationnelles (524) sont lisibles par un ensemble lecteur de disques (112) pour commander la rotation du biodisque optique.

9. Biodisque optique (110) selon la revendication 1, comprenant en autre :

une zone cible (140) disposée entre le centre et le bord externe ;
une couche active (144) formée sur la surface de ladite couche mince semi-réflectrice (516) et
au moins une sonde de capture qui se fixe à ladite couche active (144) de sorte que la sonde de capture est immobilisée sur ladite couche active (144) à l'intérieur de la zone cible (140) pour former ainsi une zone de capture.

10. Biodisque optique (110) selon la revendication 1, dans lequel ladite couche protectrice (512) est transparente.

11. Biodisque optique (110) selon la revendication 10, dans lequel ladite couche protectrice (512) présente un ou plusieurs canaux moulés à celle-ci de telle sorte que lorsque la couche protectrice est couplée à la couche réflectrice (516) des canaux fluidiques sont formés.

12. Biodisque optique selon la revendication 1, comprenant en outre un ou plusieurs orifices d'entrée d'échantillon s'étendant à travers la couche protectrice et la couche réflectrice, dans lequel les orifices d'entrée d'échantillon donnent accès à la chambre d'analyse d'échantillon de sorte que les échantillons peuvent être introduits dans la chambre d'analyse d'échantillon par le biais d'un ou de plusieurs orifices d'entrée d'échantillon.

13. Système formant biodisque optique transmetteur de lumière (110) et lecteur de disques (112), le système comprenant :

un biodisque optique transmetteur de lumière (110) comprenant :

un substrat sensiblement circulaire ayant un centre et un bord externe, le substrat comprenant des structures opérationnelles (524) sur une surface supérieure ;

une couche mince semi-réflectrice (516) couvrant sensiblement les structures opérationnelles (524) ;

une partie de coiffe (512) fixée d'un seul tenant à la couche mince semi-réflectrice (516) par un élément adhésif, l'élément adhésif ayant une ou plusieurs parties retirées, formant ainsi un ou plusieurs canaux (522) définis entre elles ; et

une ou plusieurs sondes de capture immobilisées sur la couche mince semi-réflectrice (516), les sondes de capture définissant des zones de capture à l'intérieur du ou des canaux (522) ; et

un lecteur de disques (112) comprenant :

une source lumineuse (150) destinée à diriger la lumière vers lesdites zones de capture ;

un système détecteur destiné à détecter la lumière réfléchie par ou transmise à travers le biodisque optique au niveau des zones de capture ; et

un processeur (166) couplé au système détecteur, le processeur recevant des signaux émis par le système détecteur indiquant l'incidence de la lumière sur le système détecteur, les signaux pouvant être utilisés pour compter des éléments dans un échantillon fixé aux sondes de capture.

14. Système selon la revendication 13, dans lequel ledit système détecteur est composé d'un détecteur et de composants optiques.

15. Système selon la revendication 14, dans lequel lesdits composants optiques dirigent la lumière vers ledit détecteur.

16. Système selon la revendication 13, comprenant en outre une couche protectrice positionnée sur les structures opérationnelles sur la surface supérieure du substrat.

17. Système selon la revendication 16, comprenant en outre une couche réfractive positionnée sur la couche protectrice.

18. Système selon la revendication 13, dans lequel le système détecteur est situé sur le côté opposé de la source lumineuse pour détecter la lumière transmise à travers les zones de capture dudit biodisque optique transmetteur (110).

19. Système selon la revendication 13, dans lequel la couche de structures opérationnelles transmettrice est choisie dans le groupe comprenant des métaux réflecteurs, des semi-conducteurs; et des couches diélectriques.

20. Système selon la revendication 13, comprenant en outre un composant de lentille (518) disposé sur le substrat.

21. Système selon la revendication 13, dans lequel les structures opérationnelles transmettent sensiblement la lumière.

FIG.1

FIG.2

FIG.3

FIG.4

EP 1 409 996 B1

# FIG.5

**FIG.6**

EP 1 409 996 B1

FIG.7

**FIG.8A**

FIG.8B

FIG.9

FIG.10

EP 1 409 996 B1

Objective lens 304

Astigmatic lens 306

DETECTOR 301

Detector 308

Disc 302

Laser 300

**FIG. 11**

FIG. 12

PimageArr

**FIG. 13**

FIG. 14B

FIG. 14A

**FIG. 15**

Scattered, Incident and Total E-fields

Eincmod$_{p,\alpha}$

Ecircmod$_{p,\alpha}$

Etmod$_{p,\alpha}$

310

314

312

$\theta_\alpha$

deg

**FIG. 16**

Scattered, Incident and Total E-fields

Eincmod$_{p,\alpha}$

Ecircmod$_{p,\alpha}$

Etmod$_{p,\alpha}$

320

324

322

$\theta_\alpha$

$\overline{\text{deg}}$

**FIG. 17**

(X, Y, Z)

**FIG. 18**

Incident, scattered and total E-fields

$Eincmod_{p,\alpha}$

$Eradmod_{p,\alpha}$

$Etmod_{p,\alpha}$

326

328

330

$\frac{R_\alpha}{\mu m}$

**FIG. 19**

FIG. 20

**FIG. 21A**

**FIG. 21B**

**FIG. 21C**

**FIG. 21D**

FIG. 22A

FIG. 22B

FIG. 22C

FIG. 22D

FIG. 23C

FIG. 23B

FIG. 23A

**FIG. 24A**

**FIG. 24B**

Pplot'

**FIG. 25A**

Pplot'

**FIG. 25B**

Pplot'

**FIG. 25C**

Pplot'

**FIG. 25D**

**FIG. 26**

FIG. 27

FIG. 28

**FIG. 29**

EP 1 409 996 B1

FIG. 30

# FIG. 31

EP 1 409 996 B1

FIG. 32

EP 1 409 996 B1